(19) Europäisches Patentamt
European Patent Office
Office européen des brevets

(11) **EP 4 742 184 A1**

(12) **EUROPEAN PATENT APPLICATION**
published in accordance with Art. 153(4) EPC

(43) Date of publication:
**13.05.2026 Bulletin 2026/20**

(21) Application number: 24878687.3

(22) Date of filing: **23.08.2024**

(51) International Patent Classification (IPC):
*G06V 10/82* (2022.01)    *G06V 20/64* (2022.01)
*G06V 40/10* (2022.01)    *G06T 15/00* (2011.01)
*G06T 11/10* (2026.01)    *G06T 13/20* (2011.01)
*G06T 13/40* (2011.01)    *G06N 3/0455* (2023.01)
*G06T 9/00* (2006.01)

(52) Cooperative Patent Classification (CPC):
**G06V 10/82; G06N 3/0455; G06T 9/00;
G06T 11/10; G06T 13/20; G06T 13/40; G06T 15/00;
G06V 20/64; G06V 40/107**

(86) International application number:
**PCT/CN2024/114151**

(87) International publication number:
**WO 2025/082036 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.10.2023 CN 202311367748**

(71) Applicant: **Tencent Technology (Shenzhen)
Company Limited
Shenzhen, Guangdong 518057 (CN)**

(72) Inventors:
• **HUANG, Xuan
Shenzhen, Guangdong 518057 (CN)**
• **LI, Hanhui
Shenzhen, Guangdong 518057 (CN)**
• **YANG, Zejun
Shenzhen, Guangdong 518057 (CN)**
• **WANG, Zhisheng
Shenzhen, Guangdong 518057 (CN)**
• **LIANG, Xiaodan
Shenzhen, Guangdong 518057 (CN)**

(74) Representative: **Gunzelmann, Rainer et al
Wuesthoff & Wuesthoff
Patentanwälte und Rechtsanwalt PartG mbB
Schweigerstraße 2
81541 München (DE)**

(54) **IMAGE PROCESSING METHOD AND APPARATUS, METHOD AND APPARATUS FOR
TRAINING BODY PART IMAGE PREDICTION MODEL, AND COMPUTER DEVICE,
COMPUTER-READABLE STORAGE MEDIUM AND COMPUTER PROGRAM PRODUCT**

(57) The present application belongs to the technical field of artificial intelligence. Disclosed are an image processing method and apparatus, a method and apparatus for training a body part image prediction model, and a computer device, a computer-readable storage medium and a computer program product. The method comprises: acquiring a first body image, which is an image in a first angle of view; calling a feature coding network to perform image coding on the first body image, so as to obtain fused feature representations of at least two query points on a body object, wherein an nth fused feature representation is used for indicating a feature representation of an image region which is symmetric in terms of a physiological structure; and calling a decoding network to perform feature decoding on the fused feature representations of the at least two query points, so as to obtain decoded features, and performing rendering by means of the decoded features, so as to obtain a second body image, which is image information in a second angle of view.

510

Obtain a first limb image

520

Call a feature encoding network to perform image encoding on the first limb image, to obtain a fused feature representation of each of at least two query points on a limb object

530

Call a decoding network to perform feature decoding on at least two fused feature representations, to obtain decoded features; and perform rendering based on the decoded features to obtain a second limb image

FIG. 3

**Description**

RELATED APPLICATION

This application claims priority to Chinese Patent Application No. 202311367748.0, filed on October 20, 2023, which is incorporated herein by reference in its entirety.

FIELD OF THE TECHNOLOGY

The present disclosure relates to the field of artificial intelligence technologies, and relates to, but is not limited to, an image processing method, a method for training a limb part image prediction model, an apparatus, a computer device, a computer-readable storage medium, and a computer program product.

BACKGROUND OF THE DISCLOSURE

In multimedia technologies, there is a need to observe a complex action from different angles. An example in which a gesture is made with two hands is used. There is a need to observe the two hands from different angles to check relative positions of the two hands, to facilitate imitation of the gesture with the two hands.

In the related art, a camera-based image capture device can capture an image, for observing two hands of a user, only from a single direction based on a placement position of the image capture device by the user. When there is a need to display an image of the two hands of the user in another direction, an artificial neural network needs to be invoked to perform image prediction. A global feature is extracted from the image to perform prediction on the image of the two hands to generate the image in the another direction.

However, according to the method in the related art, feature information cannot be sufficiently extracted from the image, resulting in a poor effect of generating an image of two hands.

SUMMARY

Embodiments of the present disclosure provide an image processing method, a method for training a limb part image prediction model, an apparatus, a computer device, a computer-readable storage medium, and a computer program product, to accurately render a limb image of a limb object from a second perspective based on effectively extracted feature information, improving rendering precision of a second limb image.

The embodiments of the present disclosure include the following technical solutions:

The present disclosure provides an image processing method, the method being performed by a computer device, and the method including: obtaining a first limb image, the first limb image being an image of a limb object from a first perspective, the limb object including a first limb and a second limb, and the first limb and the second limb having symmetry in a physiological structure; invoking a feature encoding network of a limb part image prediction model to perform image encoding on the first limb image, to obtain a fused feature representation of each of at least two query points on the limb object, an $n^{th}$ query point in the at least two query points being a query point on the first limb, an $n^{th}$ fused feature representation of the $n^{th}$ query point indicating a feature representation of an image region with symmetry in the physiological structure, and the $n^{th}$ fused feature representation being configured for supplementing a feature representation of the $n^{th}$ query point based on the symmetry of the limb object by using a feature representation on the second limb; invoking a decoding network of the limb part image prediction model to perform feature decoding on fused feature representations of the at least two query points, to obtain decoded features; and performing rendering based on the decoded features to obtain a second limb image, the second limb image being an image of the limb object from a second perspective, a generation region corresponding to the $n^{th}$ query point in the second limb image being obtained through decoding after feature supplementation is performed based on the feature representation on the second limb, and the second perspective being different from the first perspective.

An embodiment of the present disclosure provides a method for training a limb part image prediction model, the method being performed by a computer device, the limb part image prediction model including a feature encoding network and a decoding network, and the method including:

obtaining a sample information pair, the sample information pair including a first sample image and a second sample image, the first sample image being an image of a sample object from a first perspective, the second sample image being an image of the sample object from a second perspective, the first perspective being different from the second perspective, the sample object including a first limb and a second limb, and the first limb and the second limb having symmetry in a physiological structure; invoking the feature encoding network to perform image encoding on the first sample image, to obtain a predicted feature representation of each of at least two sample query points on the sample object, an $n^{th}$ sample query point in the at least two sample query points being a sample query point on the first limb, an $n^{th}$ predicted feature representation of the $n^{th}$ sample query point indicating a feature representation of a sample region with symmetry in the physiological structure, and the $n^{th}$ predicted feature representation being configured for supplementing a feature representation of the $n^{th}$ sample query point based on the symmetry of the sample object by using a feature representation on the second limb; invoking the decoding network to perform feature decoding on predicted feature representations of the at least two sample query points, to obtain sample decoded features; performing rendering based on the sample decoded features to obtain a predicted limb image, a generation region corresponding to the $n^{th}$ sample query point in the predicted limb image being obtained through decoding after feature supplementation is performed based on the feature representation on the second limb, and the predicted limb image being an image that is of the sample object from the second perspective and that is obtained through prediction; and training the limb part image prediction model based on a difference between the predicted limb image and the second sample image to obtain a trained limb part image prediction model.

An embodiment of the present disclosure provides a method for training a limb part image prediction model, the method being performed by a computer device, the limb part image prediction model including a feature encoding network, a decoding network, and a discrimination network, and the method including: obtaining a first sample image, the first sample image being an image of a sample object from a first perspective, the sample object including a first limb and a second limb, and the first limb and the second limb having symmetry in a physiological structure; invoking the feature encoding network to perform image encoding on the first sample image, to obtain a predicted feature representation of each of at least two sample query points on the sample object, an $n^{th}$ sample query point in the at least two sample query points being a sample query point on the first limb, an $n^{th}$ predicted feature representation of the $n^{th}$ sample query point indicating a feature representation of a sample region with symmetry in the physiological structure, and the $n^{th}$ predicted feature representation being configured for supplementing a feature representation of the $n^{th}$ sample query point based on the symmetry of the sample object by using a feature representation on the second limb; invoking the decoding network to perform feature decoding on predicted feature representations of the at least two sample query points, to obtain sample decoded features; performing rendering based on the sample decoded features to obtain a predicted limb image, a generation region corresponding to the $n^{th}$ sample query point in the predicted limb image being obtained through decoding after feature supplementation is performed based on the feature representation on the second limb, the predicted limb image being an image that is of the sample object from a second perspective and that is obtained through prediction, and the first perspective being different from the second perspective; invoking the discrimination network to perform prediction based on the predicted limb image, to obtain first visibility information, the first visibility information being presented from the second perspective, and the first visibility information being visibility status that is of the sample object observed from the first perspective and that is predicted in the predicted limb image; obtaining second visibility information of the sample object, the second visibility information being presented from the second perspective, and the second visibility information being visibility status of the sample object that is in the first sample image and that is observed from the first perspective; and performing adversarial training on the discrimination network or a prediction submodel of the limb part image prediction model based on a difference between the first visibility information and the second visibility information to obtain a trained limb part image prediction model, the prediction submodel including the feature encoding network and the decoding network.

An embodiment of the present disclosure provides an image processing apparatus, the apparatus including: a first obtaining module, configured to obtain a first limb image, the first limb image being an image of a limb object from a first perspective, the limb object including a first limb and a second limb, and the first limb and the second limb having symmetry in a physiological structure; a first processing module, configured to invoke a feature encoding network of a limb part image prediction model to perform image encoding on the first limb image, to obtain a fused feature representation of each of at least two query points on the limb object, an $n^{th}$ query point in the at least two query points being a query point on the first limb, an $n^{th}$ fused feature representation of the $n^{th}$ query point indicating a feature representation of an image region with symmetry in the physiological structure, and the $n^{th}$ fused feature representation being configured for supplementing a feature representation of the $n^{th}$ query point based on the symmetry of the limb object by using a feature representation on the second limb; and a first rendering module, configured to invoke a decoding network of the limb part image prediction model to perform feature decoding on fused feature representations of the at least two query points, to obtain decoded features; and perform rendering based on the decoded features to obtain a second limb image, the second limb image being an image of the limb object from a second perspective, a generation region corresponding to the $n^{th}$ query point in the second limb image being obtained through decoding after feature supplementation is performed based on the feature representation on the second limb, and the second perspective being different from the first perspective.

An embodiment of the present disclosure provides an apparatus for training a limb part image prediction model, the limb part image prediction model including a feature encoding network and a decoding network, and the apparatus including: a second obtaining module, configured to obtain a sample information pair, the sample information pair including a first sample image and a second sample image, the first sample image being an image of a sample object from a first perspective, the second sample image being image information of the sample object from a second perspective, the first perspective being different from the second perspective, the sample object including a first limb and a second limb, and the first limb and the second limb having symmetry in a physiological structure; a second processing module, configured to invoke the feature encoding network to perform image encoding on the first sample image, to obtain a predicted feature representation of each of at least two sample query points on the sample object, an $n^{th}$ sample query point in the at least two sample query points being a sample query point on the first limb, an $n^{th}$ predicted feature representation of the $n^{th}$ sample query point indicating a feature representation of a sample region with symmetry in the physiological structure, and the $n^{th}$ predicted feature representation being configured for supplementing a feature representation of the $n^{th}$ sample query point based on the symmetry of the sample object by using a feature representation on the second limb; a second rendering module, configured to invoke the decoding network to perform feature decoding on predicted feature representations of the at least two sample query points, to obtain sample decoded features; and perform rendering based on the sample decoded features to obtain a predicted limb image, a generation region corresponding to the $n^{th}$ sample query point in the predicted limb image being obtained through decoding after feature supplementation is performed based on the feature representation on the second limb, and the predicted limb image being an image that is of the sample object from the second perspective and that is obtained through prediction; and a first training module, configured to train the limb part image prediction model based on a difference between the predicted limb image and the second sample image to obtain a trained limb part image prediction model.

An embodiment of the present disclosure provides an apparatus for training a limb part image prediction model, the limb part image prediction model including a feature encoding network, a decoding network, and a discrimination network, and the apparatus including: a third obtaining module, configured to obtain a first sample image, the first sample image being an image of a sample object from a first perspective, the sample object including a first limb and a second limb, and the first limb and the second limb having symmetry in a physiological structure; a third processing module, configured to invoke the feature encoding network to perform image encoding on the first sample image, to obtain a predicted feature representation of each of at least two sample query points on the sample object, an $n^{th}$ sample query point in the at least two sample query points being a sample query point on the first limb, an $n^{th}$ predicted feature representation of the $n^{th}$ sample query point indicating a feature representation of a sample region with symmetry in the physiological structure, and the $n^{th}$ predicted feature representation being configured for supplementing a feature representation of the $n^{th}$ sample query point based on the symmetry of the sample object by using a feature representation on the second limb; a third rendering module, configured to invoke the decoding network to perform feature decoding on predicted feature representations of the at least two sample query points, to obtain sample decoded features; and perform rendering based on the sample decoded features to obtain a predicted limb image, a generation region corresponding to the $n^{th}$ sample query point in the predicted limb image being obtained through decoding after feature supplementation is performed based on the feature representation on the second limb, the predicted limb image being an image that is of the sample object from a second perspective and that is obtained through prediction, and the first perspective being different from the second perspective; the third processing module being further configured to invoke the discrimination network to perform prediction based on the predicted limb image, to obtain first visibility information, the first visibility information being presented from the second perspective, and the first visibility information being visibility status that is of the sample object observed from the first perspective and that is predicted in the predicted limb image; the third obtaining module being further configured to obtain second visibility information of the sample object, the second visibility information being presented from the second perspective, and the second visibility information being visibility status of the sample object that is in the first sample image and that is observed from the first perspective; and a second training module, configured to perform adversarial training on the discrimination network or a prediction submodel of the limb part image prediction model based on a difference between the first visibility information and the second visibility information to obtain a trained limb part image prediction model, the prediction submodel including the feature encoding network and the decoding network.

An embodiment of the present disclosure provides a computer device. The computer device includes a processor and a memory. The memory stores at least one executable instruction, at least one section of a program, a code set, or an instruction set. The at least one executable instruction, the at least one section of the program, the code set, or the instruction set is loaded and executed by the processor to implement the image processing method or the method for training the limb part image prediction model according to the foregoing aspect.

An embodiment of the present disclosure provides a computer-readable storage medium. The computer-readable storage medium stores at least one executable instruction, at least one section of a program, a code set, or an instruction set. The at least one executable instruction, the at least one section of the program, the code set, or the instruction set is loaded and executed by a processor to implement the image processing method or the method for training the limb part image prediction model according to the foregoing aspect.

An embodiment of the present disclosure provides a computer program product. The computer program product includes executable instructions. The executable instructions are stored in a computer-readable storage medium. A processor reads the executable instructions from the computer-readable storage medium and executes the executable instructions, to implement the image processing method or the method for training the limb part image prediction model according to the foregoing aspect.

The technical solutions provided in the embodiments of the present disclosure have at least the following beneficial effects:

A computer device performs image encoding on a first limb image to obtain a fused feature representation of a query point on a limb object, and supplements a feature representation of the query point on a first limb by using a feature representation on a second limb based on symmetry of the limb object in a physiological structure, thereby expanding a dimension of feature extraction on the query point, so that the feature representation of the query point on the first limb includes more information. Then, when feature decoding is performed based on the fused feature representation of the query point to obtain a final second limb image, a more accurate second limb image can be generated. In addition, due to the symmetry of the first limb and the second limb in the physiological structure, the feature representation of the query point is described jointly on the two limb objects with the symmetry in the physiological structure, thereby helping represent information about the first limb by using information about the second limb. In this way, through the full use of the symmetry in the physiological structure, even when the limb object is self-occluded, feature information can be effectively extracted from the image, so that the limb image of the limb object from a second perspective is accurately rendered based on the effectively extracted feature information, improving rendering precision of the second limb image.

BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without creative efforts.

FIG. 1 is a schematic diagram of a computer system according to an exemplary embodiment of the present disclosure.

FIG. 2 is a schematic diagram of a limb part image prediction model according to an exemplary embodiment of the present disclosure.

FIG. 3 is a flowchart 1 of an image processing method according to an exemplary embodiment of the present disclosure.

FIG. 4 is a flowchart 2 of an image processing method according to an exemplary embodiment of the present disclosure.

FIG. 5 is a flowchart 3 of an image processing method according to an exemplary embodiment of the present disclosure.

FIG. 6 is a flowchart 4 of an image processing method according to an exemplary embodiment of the present disclosure.

FIG. 7 is a flowchart 5 of an image processing method according to an exemplary embodiment of the present disclosure.

FIG. 8 is a schematic diagram of a limb part image prediction model according to another exemplary embodiment of the present disclosure.

FIG. 9 is a flowchart of a method for training a limb part image prediction model according to an exemplary embodiment of the present disclosure.

FIG. 10 is a flowchart of a method for training a limb part image prediction model according to another exemplary embodiment of the present disclosure.

FIG. 11 is a schematic diagram of a discrimination network according to an exemplary embodiment of the present disclosure.

FIG. 12 is a flowchart of a method for training a limb part image prediction model according to still another exemplary embodiment of the present disclosure.

FIG. 13 is a schematic diagram of images of two hands according to an exemplary embodiment of the present disclosure.

FIG. 14 is a schematic diagram of images of two hands according to another exemplary embodiment of the present disclosure.

FIG. 15 is a schematic diagram of images of two hands according to still another exemplary embodiment of the present disclosure.

FIG. 16 is a block diagram of a structure of an image processing apparatus according to an exemplary embodiment of the present disclosure.

FIG. 17 is a block diagram of a structure of an apparatus for training a limb part image prediction model according to an exemplary embodiment of the present disclosure.

FIG. 18 is a block diagram of a structure of an apparatus for training a limb part image prediction model according to another exemplary embodiment of the present disclosure.

FIG. 19 is a block diagram of a structure of a server according to an exemplary embodiment of the present disclosure.

The accompanying drawings herein are incorporated into this specification and constitute a part of this specification, show embodiments in accordance with the present disclosure, and are used, together with this specification, to explain the principle of the present disclosure.

DESCRIPTION OF EMBODIMENTS

To make objectives, technical solutions, and advantages of the present disclosure clearer, the following further describes implementations of the present disclosure in detail with reference to the accompanying drawings.
Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments do not represent all implementations consistent with the present disclosure. On the contrary, the implementations are merely examples of apparatuses and methods that are described in detail in the appended claims and that are consistent with some aspects of the present disclosure.
Terms used in the embodiments of the present disclosure are merely for describing specific embodiments, but are not intended to limit the embodiments of the present disclosure. The terms "a" and "the" of singular forms used in the embodiments and the appended claims of the present disclosure are also intended to include plural forms, unless otherwise specified in the context clearly.
User information (including, but not limited to, user device information and user personal information) and data (including, but not limited to, data for analysis, data stored, data presented) involved in the embodiments of the present disclosure are all authorized by a user or fully authorized by all parties. In addition, collection, use, and processing of relevant data need to comply with relevant laws, regulations, and standards of relevant countries and regions. For example, a limb image and other information involved in the embodiments of the present disclosure are obtained under full authorization.
Although the terms such as first and second may be used in the embodiments of the present disclosure to describe various information, the information is not limited to these terms. These terms are merely used to distinguish between information of the same type. For example, without departing from the scope of the embodiments of the present disclosure, a first parameter may also be referred to as a second parameter, and similarly, the second parameter may also be referred to as the first parameter. Depending on the context, for example, the word "if" used herein may be interpreted as "while" or "when" or "in response to determining".

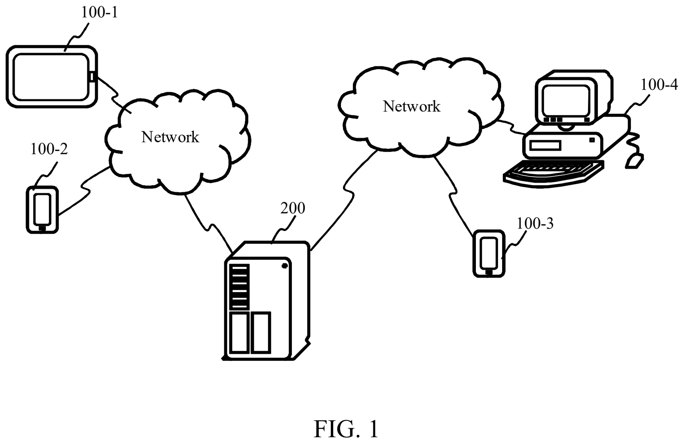

FIG. 1 is a schematic diagram of a computer system according to an embodiment of the present disclosure. The computer system may be implemented as a system architecture of at least one of a method for training a limb part image prediction model and an image processing method (that is, a method for using a limb part image prediction model). The computer system may include a terminal (for example, a terminal 100-1, a terminal 100-2, a terminal 100-3, and a terminal 100-4 in FIG. 1) and a server 200.
The terminal may be an electronic device such as a mobile phone, a tablet computer, an on-board terminal (in-vehicle infotainment), a wearable device, or a personal computer (PC). A client running a target application may be installed in the terminal. The target application may be at least one of an application for training a limb part image prediction model and an application for using a limb part image prediction model, or may be another application that provides at least one of a function of training a limb part image prediction model and a function of using a limb part image prediction model. This is not limited in the embodiments of the present disclosure. In addition, a form of the target application is not limited in the embodiments of the present disclosure, including but not limited to an application (App) or a mini program installed in the terminal, and a web page form.

The server 200 may be an independent physical server, or may be a server cluster or distributed system including a plurality of physical servers, or may be a cloud server providing cloud computing services. The server 200 may be a backend server of the target application for providing a backend service for a client of the target application.

In at least one of the method for training the limb part image prediction model and the method for using the limb part image prediction model that are provided in the embodiments of the present disclosure, operations may be performed by a computer device. The computer device is an electronic device having data computing, processing, and storage capabilities. An example in which the computer system shown in FIG. 1 is a solution implementation environment is used. The terminal may perform at least one of the method for training the limb part image prediction model and the method for using the limb part image prediction model (for example, the client that runs the target application and that is installed in the terminal performs at least one of the method for training the limb part image prediction model and the method for using the limb part image prediction model), or the server 200 may perform at least one of the method for training the limb part image prediction model and the method for using the limb part image prediction model, or the terminal and the server 200 interact and cooperate to perform at least one of the method for training the limb part image prediction model and the method for using the limb part image prediction model. This is not limited in the embodiments of the present disclosure.

In addition, the technical solutions in the embodiments of the present disclosure may be combined with a blockchain technology. For example, some data (for example, a limb image) involved in at least one of the method for training the limb part image prediction model and the method for using the limb part image prediction model that are disclosed in the embodiments of the present disclosure may be stored in a blockchain. The terminal and the server 200 may communicate with each other through a network, for example, a wired or wireless network.

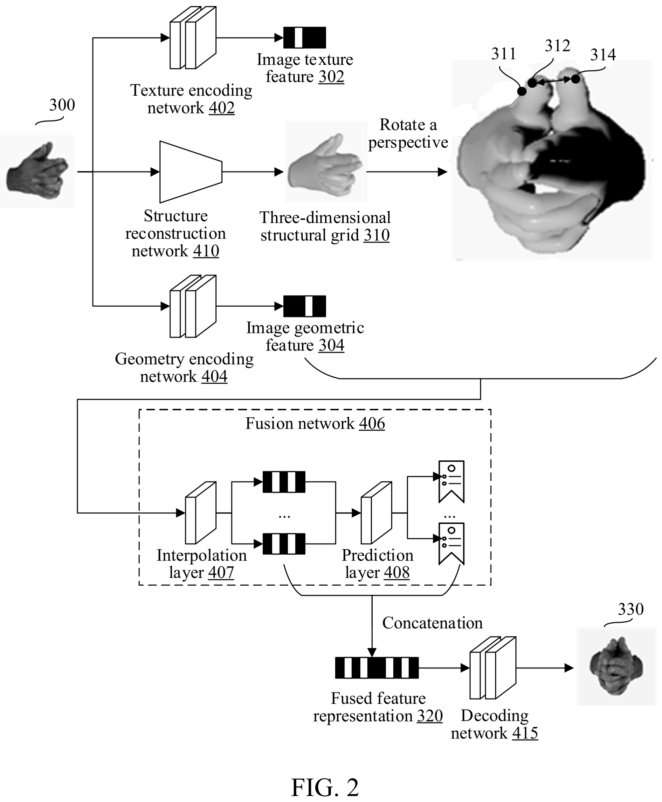

Next, the limb part image prediction model in the embodiments of the present disclosure is described as follows: FIG. 2 is a schematic diagram of a limb part image prediction model according to an embodiment of the present disclosure. As shown in FIG. 2, the limb part image prediction model includes a texture encoding network 402, a geometry encoding network 404, a structure reconstruction network 410, a fusion network 406, and a decoding network 415.

The texture encoding network 402, the geometry encoding network 404, and the structure reconstruction network 410 are networks arranged in parallel. The fusion network 406 in this embodiment is cascaded after the geometry encoding network 404 and the structure reconstruction network 410 to fuse an image geometric feature 304. Although this embodiment of the present disclosure focuses on a technical solution of performing image prediction in a geometric feature dimension, in different embodiments, the limb part image prediction model may further include another fusion network, and the fusion network is cascaded after the texture encoding network 402 and the structure reconstruction network 410 to fuse an image texture feature 302. The image prediction in a geometric feature dimension and the image prediction in a texture feature dimension may be implemented separately, or may be combined into a new technical solution for implementation. This is not limited in the embodiments of the present disclosure.

The decoding network 415 in this embodiment is cascaded after the fusion network 406. The decoding network 415 is configured to decode a feature representation obtained from the fusion network 406, to obtain a second limb image 330 through rendering based on a decoded feature.

Next, the networks in the embodiments of the present disclosure are further described.

For the limb part image prediction model, a first limb image 300 may be obtained first. The first limb image 300 is an image of a limb object from a first perspective. In an embodiment of the present disclosure, the limb object may be, for example, two hands, and the first perspective may be, for example, a right front direction of a right hand. The two hands include a left hand object and a right hand object, and the left hand object and the right hand object have symmetry in a physiological structure. The texture encoding network 402 in the limb part image prediction model is configured to extract texture features of the two hands. For example, the texture encoding network 402 is configured to extract texture features such as skin texture and horizontal texture at joints on the two hands from the first limb image 300, to obtain the image texture feature 302. The geometry encoding network 404 in the limb part image prediction model is configured to extract spatial geometric features of the two hands. For example, the geometry encoding network 404 is configured to extract three-dimensional features of the two hands in three-dimensional space from the first limb image 300, to obtain the image geometric feature 304.

Then, the structure reconstruction network 410 may be invoked to perform prediction on the first limb image 300, to obtain a three-dimensional structural grid 310 of the two hands in the first limb image 300. The three-dimensional structural grid 310 is a three-dimensional structure enclosed by at least two grid points. A query point is a key point on the two hands. In some examples, the key point may be a key point of the two hands observed from a second perspective carried in the limb part image prediction model or from a second perspective inputted into the limb part image prediction model. A plurality of query points need to be selected to generate the second limb image 330, for example, 64 or 128 query points. The query points are determined randomly on the two hands or are selected in an equidistant manner.

In an example, a query point 311 may be a middle point of a first phalanx on a thumb of a right hand, a grid point that is adjacent to the query point 311 and that is in the three-dimensional structural grid 310 may be determined as a first grid point 312, and the first grid point 312 is a fingertip point of the thumb of the right hand; and a second grid point 314 corresponding to the first grid point 312 is determined, a relative location of the first grid point 312 on the right hand is the same as a relative location of the second grid point 314 on a left hand, and the second grid point 314 is a fingertip point of a thumb of the left hand. After the first grid point 312 and the second grid point 314 are determined, location information of the first grid point 312 and the second grid point 314 that are mapped onto the first limb image 300 may be determined. For example, if a grid point is invisible on the first limb image 300, location information of the grid point is empty.

In an embodiment of the present disclosure, the fusion network 406 includes an interpolation layer 407 and a prediction layer 408. The interpolation layer 407 may be invoked to perform interpolation on the image geometric feature 304 based on the location information, to extract a first sub-region feature on a peripheral side of the first grid point 312, a second sub-region feature on a peripheral side of the second grid point 314, and a third sub-region feature on a peripheral side of the query point 311. In addition, the prediction layer 408 may be further invoked to perform prediction on the three sub-region features, to obtain weights respectively corresponding to the three sub-region features. Then, concatenation is performed based on the three sub-region features and the weights respectively corresponding to the three sub-region features to obtain a fused feature representation 320 corresponding to the query point 311. In an embodiment of the present disclosure, a fused feature representation corresponding to each of a plurality of query points may be determined one by one.

After the fused feature representation corresponding to each query point is determined, the decoding network 415 may be invoked to perform feature decoding on the fused feature representation 320, and rendering may be performed based on a decoded feature to obtain the second limb image 330. The second limb image 330 is obtained by decoding fused feature representations respectively corresponding to the plurality of query points. The second limb image 330 is image information of the limb object from a second perspective. The second perspective is different from the first perspective. For example, the second perspective may be a front direction of the right hand.

Next, an image processing method (that is, a method for using a limb part image prediction model) is described through the following embodiments.

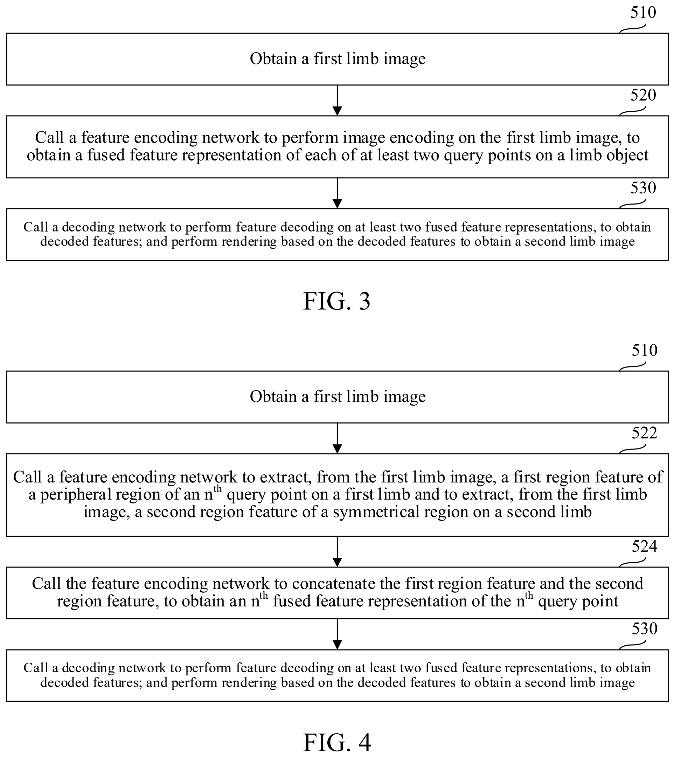

FIG. 3 is a flowchart 1 of an image processing method according to an exemplary embodiment of the present disclosure. The method may be performed by a computer device. The method includes the following operations.

In 510: a first limb image is obtained.

The first limb image is an image of a limb object from a first perspective, the limb object includes a first limb and a second limb, and the first limb and the second limb have symmetry in a physiological structure. For example, the limb object may be a limb part of a virtual object in a virtual environment, or may be a limb part of a physical object in the real world. The physical object in the real world may be a biological object, or may be an item similar to a physiological structure of a biological object (for example, a physical model built by using at least one material such as wood, stone, and fur). Similarly, the virtual object in the virtual environment may be a virtual creature, or may be a virtual item similar to a physiological structure of a biological object.

For example, in the embodiments of the present disclosure, an example in which the limb object is two hands is usually used for description, but a case in which the limb object is another limb part is not excluded. For example, the limb object includes, but is not limited to, at least one of two hands, two arms, two feet, two legs, a face, a head, and a body. In a case that the limb object includes at least one face, a left side and a right side of the face have symmetry in a physiological structure. Similar to the face, the head and the body have two sides of a central axis that have symmetry in a physiological structure. Herein, the first limb and the second limb have symmetry in the physiological structure can be understood as that: the first limb and the second limb are actually symmetrical parts with the midline of the human body as the axis of symmetry, that is, the first limb and the second limb are physiologically symmetrical.

In 520: a feature encoding network is invoked to perform image encoding on the first limb image, to obtain a fused feature representation of each of at least two query points on a limb object.

For example, in an embodiment of the present disclosure, the limb part image prediction model includes a feature encoding network and a decoding network. In this embodiment, the limb part image prediction model is configured to perform prediction by performing image encoding and image decoding on the first limb image, to obtain image information of the limb object from a second perspective.

For example, the query point is a point on the limb object, and a second limb image is obtained through prediction by encoding and decoding the query point. The query point may be an invisible point on the first limb image, that is, a point that is on the limb object and that is occluded due to an observation angle from the first perspective, or may be a visible point on the first limb image. This is not limited in the embodiments of the present disclosure. For example, there are a plurality of query points. An $n^{th}$ query point in the at least two query points may be a query point on the first limb. An $n^{th}$ fused feature representation corresponding to the $n^{th}$ query point indicates a feature representation of an image region with symmetry in a physiological structure. For example, the image region is a region including the $n^{th}$ query point. The image region may be a continuous image region, or may be two or more image regions that are not connected to each other. For example, the image region has symmetry in the physiological structure, one subpart in the image region belongs to the first limb, and the other subpart belongs to the second limb. For example, the image region is a region in which a thumb of a left hand and a thumb of a right hand are located. In other words, the image region includes a group of locations with symmetry on the limb object.

For example, the $n^{th}$ fused feature representation indicates a feature representation of the image region on the first limb image in latent space. Because the image region includes image information on the first limb and the second limb, feature extraction is performed on the $n^{th}$ query point on the first limb, and a feature representation of the $n^{th}$ query point is supplemented based on the image information on the second limb. For example, the $n^{th}$ fused feature representation is configured for supplementing the feature representation of the $n^{th}$ query point on the first limb based on the symmetry of the limb object by using a feature representation on the second limb.

In 530: a decoding network is invoked to perform feature decoding on at least two fused feature representations, to obtain decoded features; and to perform rendering based on the decoded features to obtain a second limb image.

For example, the decoding network is configured to perform rendering based on the inputted fused feature representation to obtain the second limb image. For example, the decoding network performs feature encoding on feature information in the fused feature representation, and decodes the feature representation in the latent space into image information.

For example, as a quantity of query points increases, image details are reserved more completely when the second limb image is predicted. For example, when a quantity of dimensions of a single fused feature representation is the same, as a quantity of query points increases, the second limb image carries more image detail information, such as texture of a hand and horizontal texture at a joint.

For example, a generation region corresponding to the $n^{th}$ query point in the second limb image is obtained through decoding based on the $n^{th}$ fused feature representation, the $n^{th}$ fused feature representation carries the feature representation on the second limb, and the feature representation on the second limb is configured for performing feature supplementation on the $n^{th}$ query point on the first limb. For example, the generation region corresponding to the $n^{th}$ query point in the second limb image is obtained through decoding after supplementation of the feature representation is performed based on the feature representation on the second limb. The supplementation of the feature representation means adding the feature representation on the second limb to the $n^{th}$ fused feature representation of the $n^{th}$ query point on the first limb. The second limb image is image information of the limb object from a second perspective. The second perspective is different from the first perspective.

In conclusion, according to the method provided in this embodiment of the present disclosure, image encoding is performed on a first limb image to obtain a fused feature representation of a query point on a limb object, and a feature representation of the query point on a first limb is supplemented by using a feature representation on a second limb based on symmetry of the limb object in a physiological structure, thereby expanding a dimension of feature extraction on the query point, so that the feature representation of the query point on the first limb includes more information. Then, when feature decoding is performed based on the fused feature representation of the query point to obtain a final second limb image, a more accurate second limb image can be generated. In addition, due to the symmetry of the first limb and the second limb in the physiological structure, the feature representation of the query point is described jointly on the two limb objects with the symmetry in the physiological structure, thereby helping represent information about the first limb by using information about the second limb. In this way, through the full use of the symmetry in the physiological structure, even when the limb object is self-occluded, feature information can be effectively extracted from the image, so that the limb image of the limb object from a second perspective is accurately rendered based on the effectively extracted feature information, improving rendering precision of the second limb image.

FIG. 4 is a flowchart 2 of an image processing method according to an exemplary embodiment of the present disclosure. The method may be performed by a computer device. In the embodiment shown in FIG. 3, operation 520 may be implemented as operation 522 and operation 524.

In 522: the feature encoding network is invoked to extract, from the first limb image, the first region feature of a peripheral region of the $n^{th}$ query point on the first limb and to extract, from the first limb image, the second region feature of a symmetrical region on the second limb.

For example, the $n^{th}$ fused feature representation corresponding to the $n^{th}$ query point includes a first region feature and a second region feature. The peripheral region of the $n^{th}$ query point is a region including the $n^{th}$ query point. A shape, an area, and the like of the peripheral region are not limited in this embodiment. The symmetrical region and the peripheral region of the $n^{th}$ query point have symmetry in the physiological structure. However, at least one of a shape, a location, and an area of the foregoing two regions in the first limb image is not limited, and shapes, locations, and areas of the foregoing two regions may be the same or may be different. In an example, limited by an observation angle of the first perspective, the peripheral region or the symmetrical region may be an empty set. To be specific, a line of sight of observation from the first perspective is occluded, and then the peripheral region or the symmetrical region is not present in the first limb image. The symmetrical region corresponding to the peripheral region may be obtained through labeling, or may be determined in the first limb image through prediction. A manner of determining the symmetrical region is not limited in the embodiments of the present disclosure.

In 524: the feature encoding network is invoked to concatenate the first region feature and the second region feature, to obtain the $n^{th}$ fused feature representation of the $n^{th}$ query point.

The $n^{th}$ fused feature representation is obtained by concatenating the first region feature and the second region feature. For example, the first region feature and the second region feature may be connected from head to tail and concatenated to obtain the $n^{th}$ fused feature representation. Alternatively, feature information may be concatenated for a plurality of times to obtain the fused feature representation corresponding to each of at least two query points.

In an exemplary manner of the embodiments of the present disclosure, the first region feature and the second region feature have corresponding weight information. Operation 524 in this embodiment may be implemented as the following operations: First, the feature encoding network is invoked to perform prediction on the first region feature and the second region feature, to obtain a first weight corresponding to the first region feature and a second weight corresponding to the second region feature; and then, concatenation is performed based on a product of the first weight and the first region feature and a product of the second weight and the second region feature to obtain the $n^{th}$ fused feature representation corresponding to the $n^{th}$ query point, to obtain at least two fused feature representations. In other words, the product of the first weight and the first region feature and the product of the second weight and the second region feature are concatenated to obtain the $n^{th}$ fused feature representation corresponding to the $n^{th}$ query point.

For example, the feature encoding network includes a multilayer perceptron (MLP) that performs prediction on the inputted first region feature and second region feature, to obtain the weight information corresponding to the first region feature and the weight information corresponding to the second region feature. A value of the weight information is greater than 0 and less than 1. In some embodiments, the weight information may be predicted by another artificial neural network (ANN). For example, the weight information may be predicted based on a latent feature of the feature representation. For example, the $n^{th}$ fused feature representation includes two subparts concatenated from head to tail, a first subpart is the product of the first weight and the first region feature, and a second subpart is the product of the second weight and the second region feature.

In conclusion, according to the method provided in this embodiment of the present disclosure, image encoding is performed on the first limb image to obtain the fused feature representation of the query point on the limb object, then the first region feature and the second region feature are concatenated based on the symmetry of the limb object in the physiological structure, and the feature representation of the query point on the first limb is supplemented by using the second region feature on the second limb, thereby expanding a dimension of feature extraction on the query point. In addition, the feature representation of the query point is described jointly on the two limb objects with the symmetry in the physiological structure. In this way, the symmetry in the physiological structure is fully utilized, so that even when the limb object is self-occluded, feature information can be effectively extracted from the image, improving an effect of rendering the limb image of the limb object from the second perspective.

Next, an encoding process of the first region feature and the second region feature is described.

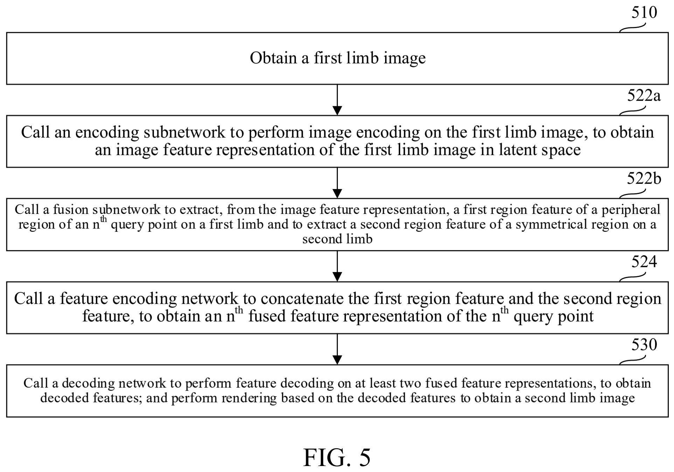

FIG. 5 is a flowchart 3 of an image processing method according to an exemplary embodiment of the present disclosure. The method may be performed by a computer device. In the embodiment shown in FIG. 4, operation 522 may be implemented as operation 522a and operation 522b:

In 522a: the encoding subnetwork is invoked to perform image encoding on the first limb image, to obtain an image feature representation of the first limb image in latent space.

In an embodiment of the present disclosure, the feature encoding network includes an encoding subnetwork and a fusion subnetwork.

In the encoding process of the first region feature and the second region feature, the first limb image may be determined as an input parameter of the encoding subnetwork, and the input parameter is inputted into the encoding subnetwork to perform image encoding, to obtain the image feature representation of the first limb image in the latent space. The image feature representation is a global feature representation of the first limb image. For example, the encoding subnetwork may perform encoding through two-dimensional convolution to obtain the image feature representation.

In an example, the image feature representation indicates a texture feature, for example, skin texture, in the first limb image. Correspondingly, the encoding subnetwork may be a residual-connected convolutional neural network (CNN), and is also referred to as a texture encoder. In another example, the image feature representation indicates a spatial geometric feature in the first limb image. Correspondingly, the encoding subnetwork may be an hourglass network, and is also referred to as a geometry encoder. Certainly, in another embodiment, the foregoing two examples may be combined. This is not limited in the embodiments of the present disclosure.

In 522b: the fusion subnetwork is invoked to extract, from the image feature representation, the first region feature of the peripheral region of the $n^{th}$ query point on the first limb and to extract the second region feature of the symmetrical region on the second limb.

For example, the image feature representation may be determined as an input parameter of the fusion subnetwork, and the peripheral region and the symmetrical region are sampled one by one in the image feature representation through bilinear interpolation, to obtain the first region feature of the peripheral region and the second region feature of the symmetrical region.

In an example, operation 524 in this embodiment of the present disclosure is implemented by invoking the fusion subnetwork. To be specific, the fusion subnetwork is invoked to concatenate the first region feature and the second region feature to obtain the $n^{th}$ fused feature representation corresponding to the $n^{th}$ query point, and then obtain fused feature representations of at least two query points.

In conclusion, according to the method provided in this embodiment of the present disclosure, image encoding is performed on the first limb image to extract the global image feature representation of the first limb image, and then the first region feature and the second region feature are extracted through interpolation. The feature representation of the query point on the first limb is supplemented by using the feature representation on the second limb, thereby expanding a dimension of feature extraction on the query point. In addition, the feature representation of the query point is described jointly on the two limb objects with the symmetry in the physiological structure. In this way, the symmetry in the physiological structure is fully utilized. The latent feature of the query point is described based on the peripheral region and the symmetrical region with physiological symmetry in the first limb image, providing a fine-grained image feature extraction manner, and avoiding interference to generation of the limb image from the second perspective due to different geometric structures and surface texture at various locations of the limb object when the global feature of the image is used, thereby ensuring that the limb image from the second perspective can carry local texture details of the limb object, and improving an effect of rendering the limb image of the limb object from the second perspective.

Next, the peripheral region and the symmetrical region of the $n^{th}$ query point are described.

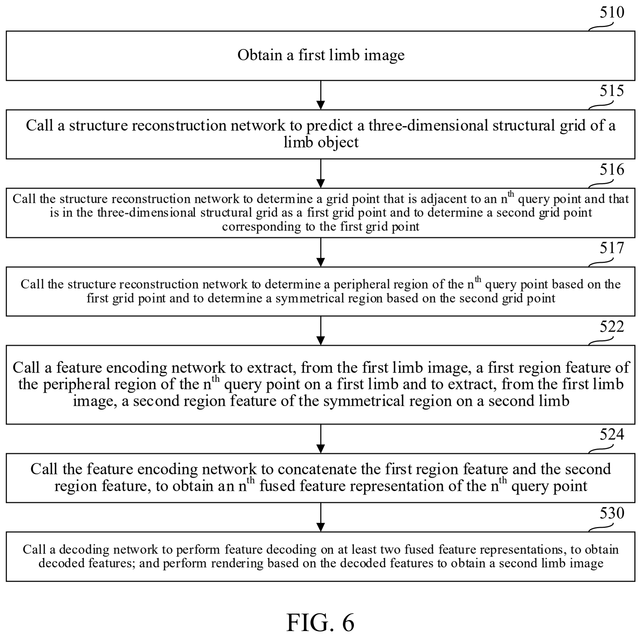

FIG. 6 is a flowchart 4 of an image processing method according to an exemplary embodiment of the present disclosure. The method may be performed by a computer device. Based on the embodiment shown in FIG. 4, the method further includes operation 515, operation 516, and operation 517.

In 515: the structure reconstruction network is invoked to predict a three-dimensional structural grid of the limb object.

In an embodiment of the present disclosure, the structure reconstruction network may be invoked to perform prediction on the first limb image, to obtain the three-dimensional structural grid of the limb object in the first limb image. For example, the first limb image may be determined as an input parameter of the structure reconstruction network to predict the three-dimensional structural grid of the limb object in the first limb image. The structure reconstruction network is a model with a capability of predicting a three-dimensional structure. In an example, description is made by using an example in which the limb object is two hands, and the structure reconstruction network is a hand model with articulated and non-rigid deformations (MANO). The first limb image is inputted into the MANO model to obtain a three-dimensional structural grid of the two hands.

In 516: the structure reconstruction network is invoked to determine a grid point that is adjacent to the $n^{th}$ query point and that is in the three-dimensional structural grid as a first grid point and to determine a second grid point corresponding to the first grid point.

For example, the three-dimensional structural grid includes a plurality of grid points, and a three-dimensional structure of the limb object is enclosed by the grid points. For example, the grid points on the three-dimensional structural grid are vertexes on the three-dimensional structural grid. As described above, the query point is a point determined randomly on the two hands or a point selected in an equidistant manner from the second perspective. The second perspective may be a perspective parameter carried in the limb part image prediction model or may be a parameter inputted into the limb part image prediction model. Because the grid points are the vertexes on the three-dimensional structural grid and are arranged sparsely on the three-dimensional structural grid, the grid point that is adjacent to the $n^{th}$ query point and that is in the three-dimensional structural grid may be determined as the first grid point, and a distance between the first grid point and the $n^{th}$ query point is less than or equal to that between any other grid points. For example, a relative location of the first grid point on the first limb is the same as a relative location of the second grid point on the second limb, so that the second grid point corresponding to the first grid point is determined.

In 517: the structure reconstruction network is invoked to determine the peripheral region of the $n^{th}$ query point based on the first grid point and to determine the symmetrical region based on the second grid point.

For example, the peripheral region of the $n^{th}$ query point includes the $n^{th}$ query point. For the peripheral region of the $n^{th}$ query point, in an implementation, the peripheral region includes the $n^{th}$ query point by using the first grid point as a center, so that the peripheral region of the $n^{th}$ query point is determined based on the first grid point. For example, same as the peripheral region, the symmetrical region also has a symmetrical query point. A physiological structure location of the symmetrical query point on the second limb is the same as a physiological structure location of the $n^{th}$ query point on the first limb. Similarly, the symmetrical region includes the symmetrical query point by using the second grid point as a center, so that the symmetrical region is determined based on the second grid point.

In an implementation, that the peripheral region of the $n^{th}$ query point is determined based on the first grid point and the symmetrical region is determined based on the second grid point may be further implemented as: invoking the structure reconstruction network to determine first location information of the first grid point mapped onto the first limb image; determining the peripheral region of the $n^{th}$ query point by using the first location information as a center; invoking the structure reconstruction network to determine second location information of the second grid point mapped onto the first limb image; and determining the symmetrical region by using the second location information as a center.

In conclusion, according to the image processing method provided in this embodiment of the present disclosure, image encoding is performed on the first limb image to obtain the fused feature representation of the query point on the limb object, and the symmetrical region and the peripheral region on the limb object are determined through the structure reconstruction network, so that the three-dimensional structure of the limb object is predicted based on two-dimensional image information. Then, a region that has symmetry in a physiological structure and that is in the three-dimensional structure is mapped onto the two-dimensional image, so that the symmetrical region and the peripheral region in which feature extraction needs to be performed are determined accurately. In addition, the first region feature and the second region feature are concatenated based on the symmetry of the limb object in the physiological structure, and the feature representation of the query point on the first limb is supplemented by using the second region feature on the second limb, expanding a dimension of feature extraction on the query point. In this way, the feature representation of the query point is described jointly on the two limb objects with the symmetry in the physiological structure, thereby fully utilizing the symmetry in the physiological structure, so that even when the limb object is self-occluded, feature information can be effectively extracted from the image, improving an effect of rendering the limb image of the limb object from the second perspective.

Next, a spatial feature is described. In an implementation of the embodiments of the present disclosure, based on the embodiment shown in FIG. 4, after operation 524, the method further includes the following operations: First, a location of interest of the point of interest on the three-dimensional structural grid and a query location of the $n^{th}$ query point on the three-dimensional structural grid are obtained. Then, the feature encoding network is invoked to construct the spatial feature based on the location of interest and the query location; and the spatial feature is added to the fused feature representation.

For example, the $n^{th}$ fused feature representation further includes a spatial feature, and the spatial feature indicates a spatial depth of the $n^{th}$ query point relative to a point of interest of the limb object. The point of interest is a point, on the limb object, having visual saliency or associated with an activity of the limb object. An example in which the limb object is two hands is used for description, and the point of interest may be a joint point on the two hands. The location of interest is a location in three-dimensional space, and the three-dimensional space is three-dimensional space in which the three-dimensional structural grid is located when a three-dimensional structure of the limb object is predicted. The spatial feature includes the location of interest and the query location. An example in which the limb object is two hands is used, and the spatial feature is obtained based on the query location of the $n^{th}$ query point in the three-dimensional space and the location of interest of a joint on the two hands.

In an example, the $n^{th}$ query point is recorded as q, and the point of interest is recorded as $p_k$. Herein, k points of interest are used as an example for description. For example, a plane in which the first limb image is located is recorded as $P_n$, a depth value of the $n^{th}$ query point relative to the plane in which the first limb image is located is recorded as $z(q|P_n)$, a depth value of the point of interest relative to the plane in which the first limb image is located is recorded as $z(p_k|P_n)$, and a relative depth difference $\delta_n(p_k, q)$ between the depth value of the $n^{th}$ query point and the depth values of all points of interest $p_k$ is expressed as the following formula (1):

$$\delta_n(p_k, q) = z(p_k|P_n) - z(q|P_n) \qquad (1)$$

Location encoding and Gaussian kernel calculation are performed on the relative depth difference to obtain the spatial feature of the $n^{th}$ query point according to the following formula (2) and formula (3):

$$s_n(q|\mathcal{P}) = \left[\exp\left(\frac{-l_2(p_k,q)^2}{2\alpha^2}\right)\gamma\big(\delta_n(p_k, q)\big)\right]_{k=1}^{K} \qquad (2)$$

$$\gamma_L(x) = [\sin(x), \cos(x), \ldots, \sin(2^{L-1}x), \cos(2^{L-1}x)] \qquad (3)$$

Herein, $s_n(q|\mathcal{P})$ is the spatial feature of the $n^{th}$ query point in the plane in which the first limb image is located; $\exp\left(\frac{-l_2(p_k,q)^2}{2\alpha^2}\right)$ is a Gaussian kernel; $l_2$ is L2-norm calculation; $\alpha$ is a weight coefficient for controlling an influence of the point of interest, for example, a weight coefficient for controlling an influence of each hand joint; $\gamma(\cdot)$ indicates location encoding; L is a hyper-parameter for controlling maximum encoding frequency and is predetermined based on granularity of the location encoding; k is a quantity of points of interest; and x represents any query point q.

In conclusion, according to the method provided in this embodiment of the present disclosure, image encoding is performed on the first limb image to obtain the fused feature representation of the query point on the limb object, and the feature representation of the query point on the first limb is supplemented by using the feature representation on the second limb based on the symmetry of the limb object in the physiological structure. The spatial depth of query point relative to the point of interest of the limb object is described quantitatively based on the spatial feature, expanding a dimension of feature extraction on the query point. The feature representation of the query point is described jointly on the two limb objects with the symmetry in the physiological structure, fully utilizing the symmetry in the physiological structure, so that even when the limb object is self-occluded, feature information can be effectively extracted from the image, improving an effect of rendering the limb image of the limb object from the second perspective.

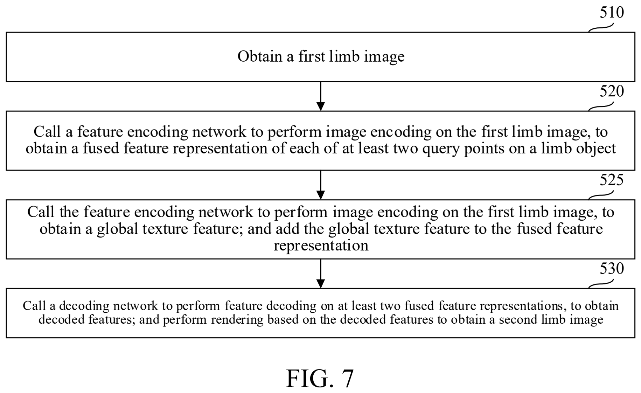

FIG. 7 is a flowchart 5 of an image processing method according to an exemplary embodiment of the present disclosure. The method may be performed by a computer device. Based on the embodiment shown in FIG. 3, the method further includes operation 525.

In 525: the feature encoding network is invoked to perform image encoding on the first limb image, to obtain a global texture feature; and to add the global texture feature to the fused feature representation.

For example, when the fused feature representation indicates the texture feature of the limb object, the $n^{th}$ fused feature representation further includes a global texture feature. The global texture feature indicates global average texture information on the limb object. The fused feature representation is supplemented based on global information by adding the global texture information to the fused feature representation. In this way, even when occlusion occurs from the first perspective, and the $n^{th}$ query point and a corresponding symmetrical point on the second limb are both invisible, because texture information at all the locations on the limb object has similarity, texture information of the occluded query point may be effectively supplemented based on the global texture information, that is, feature information representing surface texture for the $n^{th}$ query point is supplemented to the fused feature representation. For example, the global texture feature may be a global feature of the limb object in the first limb image.

In an implementation of the embodiments of the present disclosure, the fused feature representation indicates at least one of a texture feature and a geometric structure feature of the limb object. As described in the foregoing embodiment corresponding to FIG. 2, when the fused feature representation indicates the texture feature and the geometric structure feature of the limb object, feature information may be extracted by using a parallel network structure. This is not limited in the embodiments of the present disclosure. Similarly, the foregoing embodiment corresponding to FIG. 2 shows that the texture encoding network and the geometry encoding network perform image encoding from two dimensions.

In an implementation of the embodiments of the present disclosure, operation 525 in this embodiment may be implemented as the following operations: First, the feature encoding network is invoked based on a location of the first limb to extract the first texture feature from the first limb image; and the feature encoding network is invoked based on a location of the second limb to extract the second texture feature from the first limb image. Then, the feature encoding network is invoked to predict the weight information corresponding to the first texture feature and the weight information corresponding to the second texture feature; and the first texture feature, the second texture feature, the weight information corresponding to the first texture feature, and the weight information corresponding to the second texture feature are added to the fused feature representation.

For example, the global texture feature includes the first texture feature corresponding to the first limb and the second texture feature corresponding to the second limb. Through the separation of the global texture feature on the first limb and the second limb, it is fully considered that the first limb and the second limb are two parts independent of each other when the limb object is at least one of two hands, two arms, two feet, and two legs. When there are independent differences on the texture feature due to at least one factor such as a worn accessory and hair distribution, the feature information of the $n^{th}$ query point is described by separately extracting the first texture feature and the second texture feature, and configuring independent weight information. For example, the first texture feature is extracted based on a location of the first limb in the first limb image. Similarly, the second texture feature is extracted based on a location of the second limb in the first limb image.

For example, the weight information indicates an importance degree of the global texture feature in the fused feature representation. For example, different query points in a plurality of query points correspond to different weight information, and the weight information is obtained through prediction. For example, the feature encoding network has a capability of predicting the weight information. This embodiment of the present disclosure may be combined with the foregoing embodiment corresponding to FIG. 4 for implementation. To be specific, the weight information corresponding to the first region feature, the weight information corresponding to the second region feature, the weight information corresponding to the first texture feature, and the weight information corresponding to the second texture feature may be all predicted. Similar to the foregoing, the feature encoding network includes a multilayer perceptron (MLP), and the multilayer perceptron is configured to perform prediction on the inputted first texture feature and second texture feature, to obtain the weight information corresponding to the first texture feature and the weight information corresponding to the second texture feature. For example, the first texture feature and the second texture feature correspondingly have mutually independent weight information in the fused feature representation, and the weight information corresponding to the first texture feature and the weight information corresponding to the second texture feature in the fused feature representation may be the same or may be different.

In conclusion, according to the image processing method provided in this embodiment of the present disclosure, image encoding is performed on the first limb image to obtain the fused feature representation of the query point on the limb object, the feature representation of the query point on the first limb is supplemented by using the feature representation on the second limb based on the symmetry of the limb object in the physiological structure, and the global texture feature is added, fully considering the similarity of surface texture on the limb object, and expanding a dimension of feature extraction on the query point. The feature representation of the query point is described jointly on the two limb objects with the symmetry in the physiological structure, thereby fully utilizing the symmetry in the physiological structure, so that even when the limb object is self-occluded, feature information can be effectively extracted from the image, improving an effect of rendering the limb image of the limb object from the second perspective.

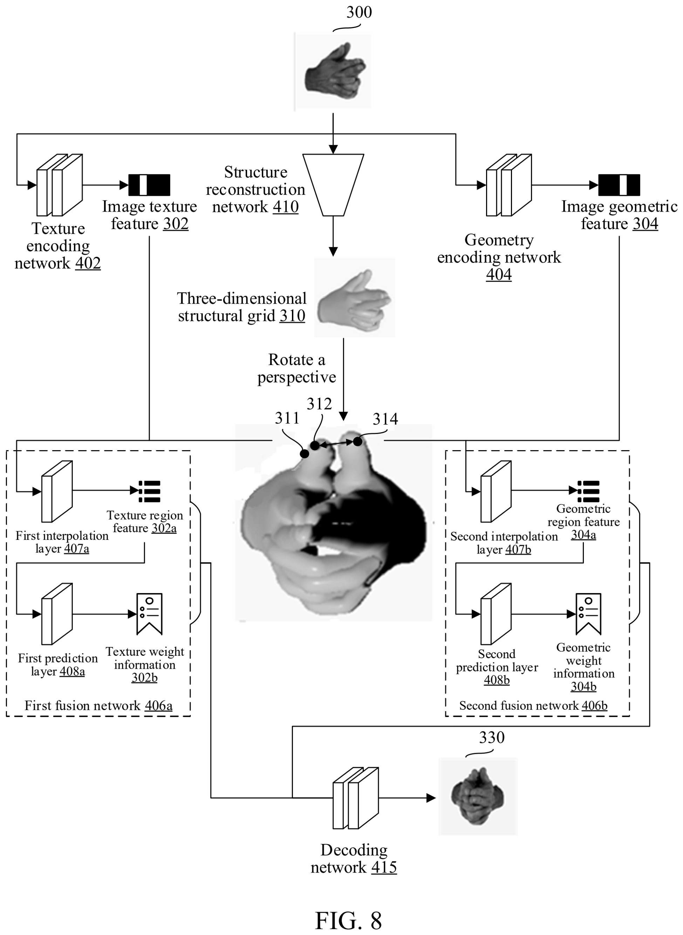

FIG. 8 is a schematic diagram of a limb part image prediction model according to another embodiment of the present disclosure.

This embodiment of the present disclosure describes a process of performing feature extraction from a geometric feature dimension and a texture feature dimension to predict a second limb image. In this embodiment of the present disclosure, for introduction of content related to the first limb image 300, the structure reconstruction network 410, and the like, refer to the foregoing embodiment corresponding to FIG. 2. Details are not described in this embodiment.

For example, the texture encoding network 402 includes a residual-connected convolutional neural network (CNN), and is also referred to as a texture encoder. The geometry encoding network 404 includes an hourglass network, and is also referred to as a geometry encoder. The texture encoding network 402 extracts texture features of the first limb image 300. Two hands are used as an example, and then texture features such as skin texture and horizontal texture at joints on the two hands may be extracted from the first limb image 300, to obtain the image texture feature 302. The geometry encoding network 404 extracts spatial geometric features of the first limb image 300. Two hands are used as an example, and then three-dimensional features of the two hands, for example, how finger joints bend in three-dimensional space and how fingers are in contact with each other, are extracted from the first limb image 300, to obtain the image geometric feature 304.

For example, the structure reconstruction network 410 is invoked to perform prediction on the first limb image 300, to obtain a three-dimensional structural grid 310 of the two hands in the first limb image 300. An example in which the query point 311 is a middle point of a first phalanx on a thumb of a right hand is used for description. A grid point that is adjacent to the query point 311 and that is in the three-dimensional structural grid 310 may be determined as the first grid point 312, and the first grid point 312 is a fingertip point of the thumb of the right hand. Correspondingly, the second grid point 314 is a fingertip point of a thumb of a left hand.

For the image texture feature 302, a first interpolation layer 407a in a first fusion network 406a may perform bilinear interpolation based on locations of the query point 311, the first grid point 312, and the second grid point 314 that are mapped onto the first limb image 300, to obtain a texture region feature 302a. In an example, the texture region feature 302a includes three subparts. A first subpart is recorded as k(q) that indicates a feature representation of a region with the query point 311 as a center point. A second subpart is recorded as m(p) that indicates a feature representation of a region with the first grid point 312 as a center point. A third subpart is recorded as n(p') that indicates a feature representation of a region with the second grid point 314 as a center point. For example, the foregoing describes a case in which the texture region feature 302a includes only the second subpart corresponding to the first grid point 312 and the third subpart corresponding to the second grid point 314. This is not limited in the embodiments of the present disclosure. The first subpart corresponds to the region with the query point 311 as the center point, so that feature information of the query point 311 can be located accurately, thereby further avoiding an impact of a location offset between the first grid point 312 and the query point 311.

The texture region feature 302a may further include a fourth subpart recorded as $\varphi(q)$, which is referred to as a spatial feature. For a manner of obtaining the spatial feature, refer to the foregoing description of the spatial feature. Details are not described herein again.

The texture region feature 302a may further include a fifth subpart and a sixth subpart. The fifth subpart is recorded as $g^l$ that indicates the first texture feature corresponding to the first limb, for example, indicates a texture feature of a left hand of two hands. The sixth subpart is recorded as $g^r$ that indicates the second texture feature corresponding to the second limb, for example, indicates a texture feature of a right hand of two hands. As described above, because texture information at all the locations on the limb object has similarity, texture information at each location may be effectively supplemented based on the global texture information, and feature information representing surface texture for the $n^{th}$ query point may be supplemented in the fused feature representation. However, for the image geometric feature 304, because the query point 311 is only a region on the limb object, and a local location on the limb object and a global geometric feature have no similarity, a geometric region feature 304a corresponding to the image geometric feature 304 usually has no global geometric feature.

For example, the foregoing six subparts in the texture region feature 302a each have corresponding weight information, the texture region feature 302a includes a product of the weight information and the corresponding subpart, and the texture region feature 302a is obtained by concatenating six products. In an example, the texture region feature 302a is recorded as $t(q)$, and $t(q)$ is calculated through the following formula (4):

$$t(q) = [a_\varphi \varphi(q), a_k k(q), a_m m(p), a_n n(p'), a_g^l g^l, a_g^r g^r] \qquad (4)$$

Herein, $a$ is the weight information corresponding to the foregoing six subparts, where $a_\varphi, a_k, a_m, a_n, a_g^l, a_g^r \in [0,1]$ are feature weight values.

A first prediction layer 408a in the first fusion network 406a performs prediction based on the foregoing six subparts to obtain texture weight information 302b. In some embodiments, calculation is performed through the function $\mu$ (refer to the following formula (5)) to obtain a feature weight value $a$ (refer to the following formula (6)):

$$\mu: R^{6D+3} \to [0,1] \qquad (5)$$

$$a = \mu(v(q,d), v(p,d), v(p',d), \varphi(q), k(q), m(p), n(p'), g^l, g^r) \qquad (6)$$

Herein, $v(q, d)$ indicates visibility of the query point 311 in an observation direction d of the first limb image 300. If $p$ is visible, $v(p, d) = 1$. Otherwise, $v(p, d) = 0$. Similarly, $v(p, d)$ indicates visibility of the first grid point 312, and $v(p', d)$ indicates visibility of the second grid point 314.

For example, when the foregoing six pieces of weight information are predicted, values of $a_\varphi$, $a_k$, $a_m$, $a_n$, $a_g^l$, $a_g^r$ may be obtained through prediction with reference to visibility information. For example, the first prediction layer 408a is a multilayer perceptron (MLP). In this case, the weight information may be predicted by using the multilayer perceptron.

In some embodiments, for the image geometric feature 304, a second interpolation layer 407b in a second fusion network 406b performs bilinear interpolation based on locations of the query point 311, the first grid point 312, and the second grid point 314 that are mapped onto the first limb image 300, to obtain a geometric region feature 304a. In an example, the geometric region feature 304a includes three subparts. For the three subparts, refer to the foregoing description of the image texture feature 302. Details are not repeated herein. The subpart in the geometric region feature 304a indicates feature information of a geometric structure, and the subpart in the texture region feature 302a indicates feature information of surface texture. For example, similar to the foregoing first fusion network 406a, a second prediction layer 408b in the second fusion network 406b performs prediction based on the subparts in the geometric region feature 304a to obtain geometric weight information 304b corresponding to each subpart.

In some embodiments, the decoding network 415 is configured to perform feature decoding on a texture fused feature formed by the texture region feature 302a and the texture weight information 302b, and on a geometric fused feature formed by the geometric region feature 304a and the geometric weight information 304b, and perform rendering based on decoded features to obtain the second limb image 330.

In some examples, the texture fused feature formed by the texture region feature 302a and the texture weight information 302b is configured for inferring a color of the second limb image 330. For example, prediction is performed on the texture fused feature based on a multilayer perceptron, to obtain the color of the second limb image 330. The geometric fused feature formed by the geometric region feature 304a and the geometric weight information 304b is configured for inferring transparency (also referred to as density) of the second limb image 330. Refer to the following formula (7):

$$\sigma(q) = w^{-1} \text{sig}(-(s(q) + \delta(q))/w) \qquad (7)$$

Herein, $\sigma(q)$ is the transparency of the query point 311, w is a weight parameter obtained through model training, $\text{sig}(\cdot)$ represents a sigmoid function, $s(q) \in R$ is a signed distance field (SDF) of the query point 311 that is calculated by using a curved grid surface as a zero-level surface, and $\delta(q) \in R$ is a deviation inferred by another multilayer perceptron using a geometric feature of q as an input.

Rendering is performed based on the color and the transparency of the second limb image 330 to obtain the second limb image 330. For example, feature decoding is performed on at least two fused feature representations respectively corresponding to at least two query points, so that an image prediction task is divided into image region prediction tasks on peripheral sides of a plurality of query points. When image region prediction on the peripheral sides of the query points is performed one by one, because image regions on the peripheral sides of the query points are local regions of the second limb image from the second perspective, a data processing volume of the decoding network is reduced. In addition, in this embodiment of the present disclosure, the decoding network can perform image prediction sequentially on the local regions without performing global prediction on the second limb image, reducing computing resources required by the computer device to invoke the decoding network, and reducing a requirement of the limb part image prediction model for a data parallel processing capability of hardware of the computer device. Moreover, this embodiment of the present disclosure further provides a function of performing image prediction independently from two dimensions: the color and transparency. To be specific, a generation task of an image region on a peripheral side of a query point may be split into prediction tasks of parameters: the color and transparency, thereby further reducing a requirement for a data parallel processing capability of hardware of the computer device.

Next, a method for training a limb part image prediction model is described through the following embodiments.

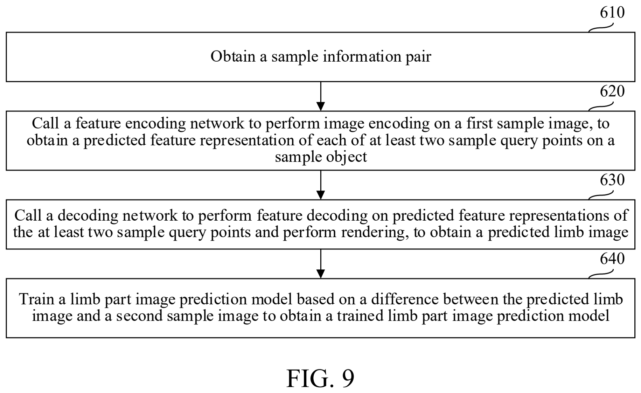

FIG. 9 is a flowchart of a method for training a limb part image prediction model according to an exemplary embodiment of the present disclosure. The method may be performed by a computer device. The method includes the following operations:

In 610: a sample information pair is obtained.

The sample information pair includes a first sample image and a second sample image, the first sample image is image information of a sample object from a first perspective, the second sample image is an image of the sample object from a second perspective, and the first perspective is different from the second perspective. The sample object includes a first limb and a second limb, and the first limb and the second limb have symmetry in a physiological structure. For example, the sample object includes, but is not limited to, at least one of two hands, two arms, two feet, two legs, a face, a head, and a body.

In 620: the feature encoding network is invoked to perform image encoding on the first sample image, to obtain a predicted feature representation of each of at least two sample query points on the sample object.

In an embodiment of the present disclosure, the limb part image prediction model includes a feature encoding network and a decoding network. For descriptions of the foregoing networks, refer to the foregoing embodiments. Details are not repeated herein.

For example, the sample query point is a point on the sample object, and prediction can be performed by encoding and decoding the sample query point to obtain a predicted limb image. For example, there are a plurality of sample query points. An $n^{th}$ predicted feature representation corresponding to an $n^{th}$ sample query point in the at least two sample query points indicates a feature representation of a sample region with symmetry in a physiological structure. The sample region has symmetry in the physiological structure, one subpart in the sample region belongs to the first limb, and the other subpart belongs to the second limb. The sample region includes a group of locations with symmetry on the sample object.

For example, the $n^{th}$ predicted feature representation is configured for supplementing the feature representation of the $n^{th}$ sample query point on the first limb based on the symmetry of the sample object by using a feature representation on the second limb.

In 630: a decoding network is invoked to perform feature decoding on predicted feature representations of the at least two sample query points, and perform rendering, to obtain a predicted limb image.

The decoding network is configured to perform rendering based on the inputted predicted feature representation to obtain the predicted limb image. For example, the decoding network performs feature encoding on feature information in the predicted feature representation, and then decodes the feature representation in the latent space into image information.

For example, a generation region corresponding to the $n^{th}$ sample query point in the predicted limb image is obtained through decoding based on the $n^{th}$ predicted feature representation, the $n^{th}$ predicted feature representation carries a supplementary feature representation, and the supplementary feature representation is a feature representation on the second limb for performing feature supplementation on the $n^{th}$ sample query point on the first limb. A generation region corresponding to the $n^{th}$ sample query point in the predicted limb image is obtained through decoding after feature supplementation is performed based on the feature representation on the second limb, and the predicted limb image is an image that is of the sample object from the second perspective and that is obtained through prediction.

In 640: the limb part image prediction model is trained based on a difference between the predicted limb image and the second sample image to obtain a trained limb part image prediction model.

For example, the limb part image prediction model is trained in a backward error propagation manner based on the difference between the predicted limb image and the second sample image, to reduce the difference between the predicted limb image and the second sample image, and improve a prediction capability of the limb part image prediction model for the predicted limb image, to obtain the trained limb part image prediction model.

For example, the limb part image prediction model obtained through training in this embodiment of the present disclosure is the network model in the foregoing embodiments corresponding to FIG. 2 to FIG. 8. In a training process, for introduction of a network structure of the limb part image prediction model, refer to the foregoing embodiments. To avoid repetition, details are not repeated in this embodiment.

In conclusion, according to the method for training the limb part image prediction model provided in this embodiment of the present disclosure, image encoding is performed on the first sample image to obtain the predicted feature representation of the sample query point on the sample object, and the feature representation of the sample query point on the first limb is supplemented by using the feature representation on the second limb based on the symmetry of the sample object in the physiological structure, thereby expanding a dimension of feature extraction on the sample query point. By training the limb part image prediction model, the trained limb part image prediction model can greatly improve a capability of generating the predicted limb image from the second perspective, thereby improving a rendering effect of the rendered limb image of the limb object from the second perspective.

In an implementation of the embodiment shown in FIG. 9, operation 620 can be implemented as the following two operations: First, the feature encoding network is invoked to extract, from the first sample image, the first predicted region feature of a peripheral region of the $n^{th}$ sample query point on the first limb and to extract, from the first sample image, the second predicted region feature of a symmetrical region on the second limb; then, the feature encoding network is invoked to concatenate the first predicted region feature and the second predicted region feature, to obtain the $n^{th}$ predicted feature representation corresponding to the $n^{th}$ sample query point; and finally, predicted feature representations of all sample query points are summarized to obtain at least two predicted feature representations.

For example, the $n^{th}$ predicted feature representation corresponding to the $n^{th}$ sample query point includes a first predicted region feature and a second predicted region feature. The peripheral region of the $n^{th}$ sample query point is a region including the $n^{th}$ sample query point. A shape, an area, and the like of the peripheral region are not limited in the embodiments of the present disclosure. The symmetrical region and the peripheral region of the $n^{th}$ sample query point have symmetry in the physiological structure.

For example, the symmetrical region corresponding to the peripheral region may be obtained through labeling, or may be determined in the first limb image through prediction. A manner of determining the symmetrical region is not limited in the embodiments of the present disclosure. In an example, the symmetrical region corresponding to the peripheral region is obtained through prediction based on a structure reconstruction network. Refer to the foregoing embodiment corresponding to FIG. 6.

In an implementation, the first predicted region feature and the second predicted region feature each have corresponding weight information. The feature encoding network may be invoked to perform prediction on the first predicted region feature and the second predicted region feature, to obtain a first weight corresponding to the first predicted region feature and a second weight corresponding to the second predicted region feature. Then, concatenation is performed based on a product of the first weight and the first predicted region feature and a product of the second weight and the second predicted region feature to obtain the $n^{th}$ predicted feature representation corresponding to the $n^{th}$ query point, to obtain at least two predicted feature representations.

For example, the feature encoding network includes a multilayer perceptron (MLP) that performs prediction on the inputted first predicted region feature and second predicted region feature, to obtain the weight information corresponding to the foregoing features. A value of the weight information is greater than 0 and less than 1. For example, the $n^{th}$ predicted feature representation includes two subparts concatenated from head to tail, a first subpart is the product of the first weight and the first predicted region feature, and a second subpart is the product of the second weight and the second predicted region feature.

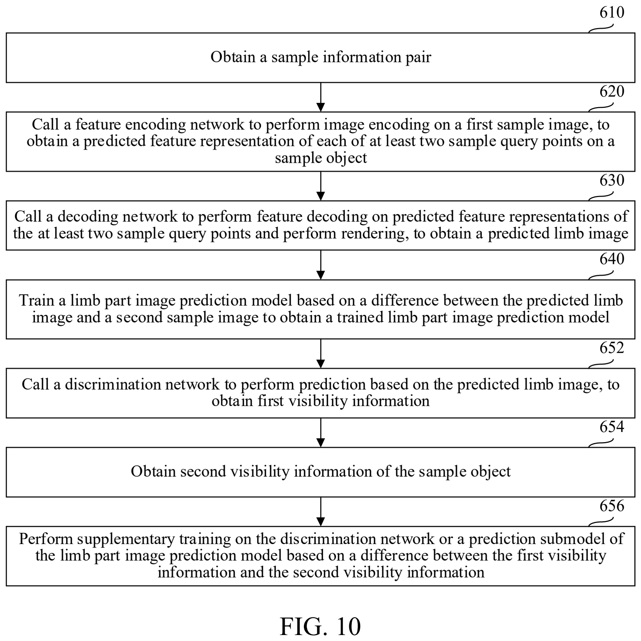

FIG. 10 is a flowchart of a method for training a limb part image prediction model according to another exemplary embodiment of the present disclosure. The method may be performed by a computer device. Based on the embodiment shown in FIG. 9, the method further includes operation 652, operation 654, and operation 656.

In 652: a discrimination network is invoked to perform prediction based on the predicted limb image, to obtain first visibility information.

For example, the first visibility information is presented from the second perspective, and the first visibility information is visibility status that is of the sample object observed from the first perspective and that is predicted in the predicted limb image. For example, the first visibility information is a binary image. In the first visibility information, a grayscale value of a pixel being 1 indicates that the pixel is visible from the first perspective, and a grayscale value of a pixel being 0 indicates that the pixel is invisible from the first perspective. In an example, the first visibility information is obtained based on image quality of the predicted limb image, and the image quality indicates a level of texture detail. Because an location invisible from the first perspective is a feature representation obtained through supplementation based on symmetry in a physiological structure or a global feature, the invisible location cannot accurately reflect an image feature and has image quality lower than that of an image region visible from the first perspective. The first visibility information can be obtained through prediction based on the foregoing characteristics of the image quality.

For example, the discrimination network may perform prediction based on the predicted limb image and an image quality difference between different regions inside the predicted limb image to obtain the first visibility information, or may perform prediction by using the first sample image as reference for the image quality to obtain the first visibility information of the predicted limb image. This is not limited in the embodiments of the present disclosure. For example, the discrimination network is also referred to as a discriminator, recorded as $\Phi(I, It)$, where I is the first sample image that provides image quality reference, and It is the predicted limb image for which the first visibility information needs to be predicted. Herein, $\Phi(I, It)$ may be calculated through the following formula (8):

$$\Phi(I, I_t): R^{H \times W} \times R_t^{H \times W} \to \{0,1\}^{H \times W} \quad (8)$$

Herein, a height and a width of I and It are H × W, and a height and a width of the first visibility information obtained by the discriminator are H × W, with a value of 0 or 1.

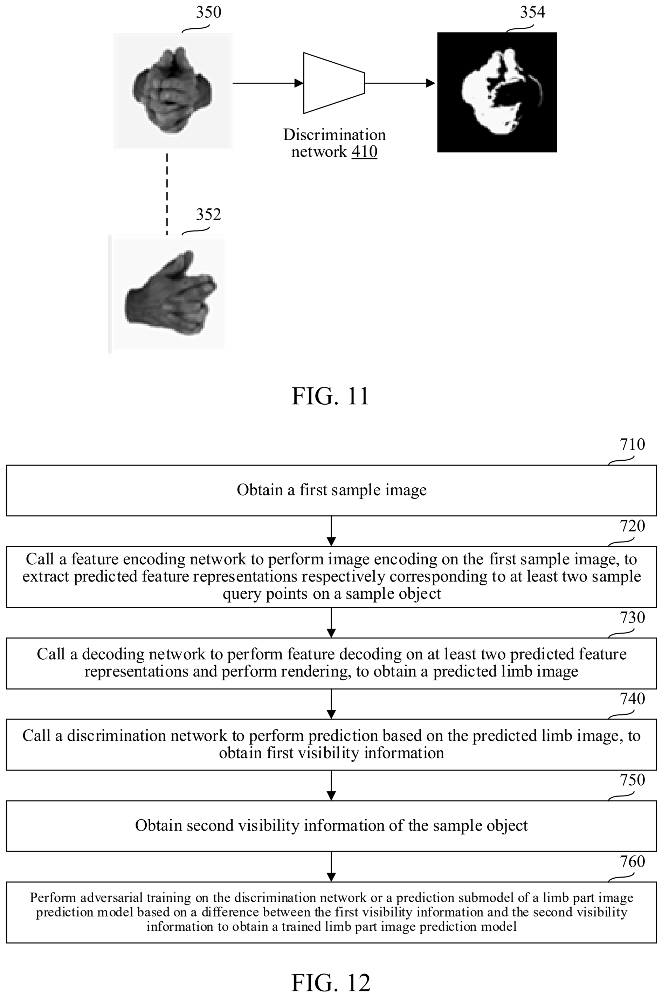

FIG. 11 is a schematic diagram of a discrimination network according to an exemplary embodiment of the present disclosure. For example, a discrimination network 410 may be invoked to perform prediction on a predicted limb image 350, to obtain first visibility information 354. The predicted limb image 350 is an image of a sample object observed from a second perspective. An example in which the sample object is two hands is used, and the second perspective is a front direction of a right hand. The predicted limb image 350 is obtained by performing prediction based on a first sample image 352. The first sample image 352 is an image of the sample object observed from a first perspective, and the first perspective is a right front direction of the right hand. For example, in the first visibility information 354, a grayscale value of a pixel being 1 indicates that the pixel is visible from the first perspective, and a grayscale value of a pixel being 0 indicates that the pixel is invisible from the first perspective. The discrimination network 410 is configured to predict visibility status of each pixel in the predicted limb image 350 from the first perspective. For example, the discrimination network 410 performs prediction based on image quality of the predicted limb image 350 to obtain the first visibility information 354.

In 654: second visibility information of the sample object is obtained.

For example, the second visibility information is presented from the second perspective, and the second visibility information is visibility status of the sample object that is in the first sample image and that is observed from the first perspective. The first sample image is an image that is from the first perspective and that is inputted into the limb part image prediction model. The second visibility information is configured for presenting the visibility status of the first sample image from the second perspective.

For example, the first perspective and the second perspective of the first sample image are different. The first sample image may be converted based on a relative angle between the first perspective and the second perspective to obtain the second visibility information.

In 656: supplementary training is performed on the discrimination network or a prediction submodel of the limb part image prediction model based on a difference between the first visibility information and the second visibility information.

For example, the difference between the first visibility information and the second visibility information indicates a prediction capability of the discrimination network for the first visibility information, that is, a capability of the discrimination network to accurately determine whether the predicted limb image is an image generated by the model. In addition, the difference between the first visibility information and the second visibility information indicates a prediction capability of the prediction submodel for the predicted limb image, where the prediction submodel includes a feature encoding network and a decoding network, that is, a capability of the prediction submodel to accurately generate image information from the second perspective.

Through the supplementary training performed on the discrimination network or the prediction submodel of the limb part image prediction model, the discrimination network and the prediction submodel are trained alternately in an adversarial training manner, to improve a prediction capability of the prediction submodel for the predicted limb image from the second perspective.

In some examples, the difference between the first visibility information and the second visibility information is expressed as the following formula (9):

$$L = \lambda_{\mathrm{rgb}} L_{\mathrm{rgb}} + \lambda_{\mathrm{VGG}} L_{\mathrm{VGG}} + \lambda_{\mathrm{adv}} L_{\mathrm{adv}} + \lambda_{\mathrm{vis}} L_{\mathrm{vis}} \qquad (9)$$

Herein, $\lambda_{\mathrm{rgb}}$, $\lambda_{\mathrm{VGG}}$, $\lambda_{\mathrm{adv}}$, and $\lambda_{\mathrm{vis}}$ are preset loss weight values. In an example, the loss weight values are set to $\lambda_{\mathrm{rgb}} = 10.0$, $\lambda_{\mathrm{VGG}} = 1.0$, $\lambda_{\mathrm{adv}} = 0.1$, and $\lambda_{\mathrm{vis}} = 0.1$.

$L_{\mathrm{rgb}}$ is an L1 norm loss between the first visibility information and the second visibility information. $L_{\mathrm{VGG}}$ is a perceptual loss between the first visibility information and the second visibility information, and indicates a semantic difference between the first visibility information and the second visibility information. $L_{\mathrm{adv}}$ is a non-saturating adversarial generative loss. $L_{\mathrm{vis}}$ is a pixel cross entropy loss for supervising visibility learning, and indicates predicted visibility. Pixel-level binary cross entropy between V and Vt is shown in the following formula (10):

$$L_{\mathrm{vis}}(V, V_t) = -(V_t \odot \log V + (1 - V_t) \odot \log(1 - V)) \qquad (10)$$

Herein, $\odot$ represents a dot product of elements, Vt represents a pixel that is in the second visibility information and that is of a visibility image generated based on a real image, and V is a pixel that is in the first visibility information and that is of a visibility image obtained through prediction.

FIG. 12 is a flowchart of a method for training a limb part image prediction model according to still another exemplary embodiment of the present disclosure. The method may be performed by a computer device. The method includes the following operations.

In 710: a first sample image is obtained.

The first sample image is image information of a sample object from a first perspective, the sample object includes a first limb and a second limb, and the first limb and the second limb have symmetry in a physiological structure. For example, the sample object includes, but is not limited to, at least one of two hands, two arms, two feet, two legs, a face, a head, and a body.

For technical features such as a feature encoding network and a predicted feature representation in the operations in this embodiment of the present disclosure, refer to the foregoing embodiments corresponding to FIG. 9 and FIG. 10. Details are not repeated herein.

In 720: a feature encoding network is invoked to perform image encoding on the first sample image, to extract predicted feature representations respectively corresponding to at least two sample query points on the sample object.

An $n^{th}$ predicted feature representation corresponding to an $n^{th}$ sample query point in the at least two sample query points indicates a feature representation of a sample region with symmetry in a physiological structure. The $n^{th}$ predicted feature representation is configured for supplementing the feature representation of the $n^{th}$ sample query point on the first limb based on the symmetry of the sample object by using a feature representation on the second limb.

In 730: a decoding network is invoked to perform feature decoding on at least two predicted feature representations, and perform rendering, to obtain a predicted limb image.

A generation region corresponding to the $n^{th}$ sample query point in the predicted limb image is obtained through decoding after feature supplementation is performed based on the feature representation on the second limb, the predicted limb image is an image that is of the sample object from the second perspective and that is obtained through prediction, and the first perspective is different from the second perspective.

In 740: a discrimination network is invoked to perform prediction based on the predicted limb image, to obtain first visibility information.

The first visibility information is presented from the second perspective, and the first visibility information is visibility status that is of the sample object observed from the first perspective and that is predicted in the predicted limb image.

In 750: second visibility information of the sample object is obtained.

The second visibility information is presented from the second perspective, and the second visibility information is visibility status of the sample object that is in the first sample image and that is observed from the first perspective.

In 760: adversarial training is performed on the discrimination network or a prediction submodel of the limb part image prediction model based on a difference between the first visibility information and the second visibility information to obtain a trained limb part image prediction model.

The prediction submodel includes a feature encoding network and a decoding network. In an adversarial training process, network parameters of the discrimination network or the prediction submodel may be alternately trained, to obtain the trained limb part image prediction model. A prediction submodel in the trained limb part image prediction model is the limb part image prediction model in the foregoing image processing method.

In an implementation, an example in which the limb part image prediction model shown in this embodiment of the present disclosure is tested based on the public dataset Interhand2.6M is used for description. Through comparison of the limb part image prediction model provided in this embodiment of the present disclosure, a non-human primates (NHP) model and a keypoint variational autoencoder-neural radiance fields (KeypointNeRF) model that are in the related art, Table 1 is obtained below.

Table 1

| Method | PSNR | SSIM | LPIPS |
|---|---|---|---|
| KeypointNeRF model | 23.49 | 0.82 | 0.27 |
| NHP model | 23.63 | 0.83 | 0.33 |
| Limb part image prediction model | 24.62 | 0.85 | 0.21 |

It can be learned that, for the three evaluation indicators: a peak signal-to-noise ratio (PSNR), a structural similarity index (SSIM), and learned perceptual image patch similarity (LPIPS), the limb part image prediction model provided in this embodiment of the present disclosure is superior to the KeypointNeRF model and the NHP model in the related art. For the limb part image prediction model, the PSNR parameter increases from 23.63, which is optimal in the related art, to 24.62, the SSIM parameter increases from 0.83, which is optimal in the related art, to 0.85, and the LPIPS parameter decreases from 0.27, which is optimal in the related art, to 0.21. The limb part image prediction model provides a better prediction capability for a limb image. When two hands are used as an example, hand structures and details are better reserved.

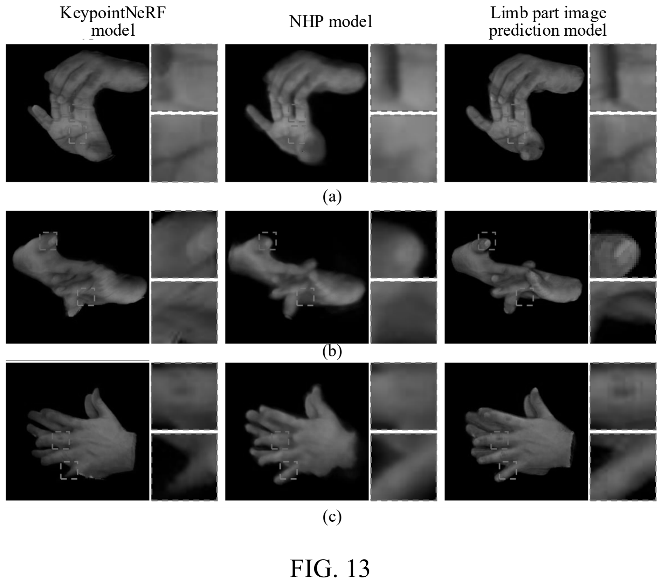

FIG. 13 is a schematic diagram of images of two hands according to an exemplary embodiment of the present disclosure. For example, FIG. 13 includes a panel (a), a panel (b), and a panel (c), and provides prediction results of images of two hands in three gestures that are obtained by the limb part image prediction model provided in the present disclosure, the NHP model and the KeypointNeRF model in the related art. In all the panels, compared with the NHP model and the KeypointNeRF model, the limb part image prediction model provided in the present disclosure obtains, through prediction, images of two hands with better image quality and fewer artifacts. In the panel (a) in FIG. 13, the image of two hands obtained through prediction by the limb part image prediction model has clarity of texture at gaps between fingers and at palmprints better than that of the NHP model and the KeypointNeRF model in the related art. In the panel (b) in FIG. 13, the image of two hands obtained through prediction by the limb part image prediction model has clarity of texture at a fingertip of a thumb, a finger root, and a boundary of a non-hand region better than that of the NHP model and the KeypointNeRF model in the related art. In the panel (c) in FIG. 13, the image of two hands obtained through prediction by the limb part image prediction model has clarity of texture at a joint on a finger, a finger root, and a boundary of a non-hand region better than that of the NHP model and the KeypointNeRF model in the related art.

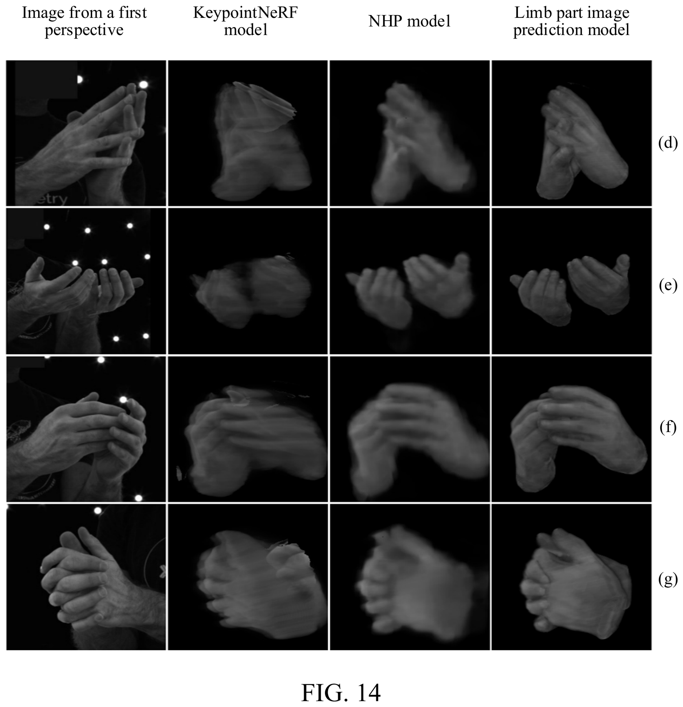

FIG. 14 is a schematic diagram of images of two hands according to an exemplary embodiment of the present disclosure. For example, FIG. 14 includes a panel (d), a panel (e), a panel (f), and a panel (g). FIG. 14 provides prediction results of images of two hands in four gestures in a large-angle change (for example, a rotation angle between a first perspective and a second perspective is greater than 30 degrees) that are obtained by the limb part image prediction model provided in the present disclosure, the NHP model and the KeypointNeRF model in the related art. In the panel (d) in FIG. 14 to the panel (g) in FIG. 14, varying degrees of problems of blurred fingers, distorted finger gestures, and non-compliance with a physiological structure occur in the images of two hands obtained through prediction by the NHP model and the KeypointNeRF model in the related art, but the limb part image prediction model provided in the present disclosure avoids the foregoing problems and obtains clear images of two hands through prediction.

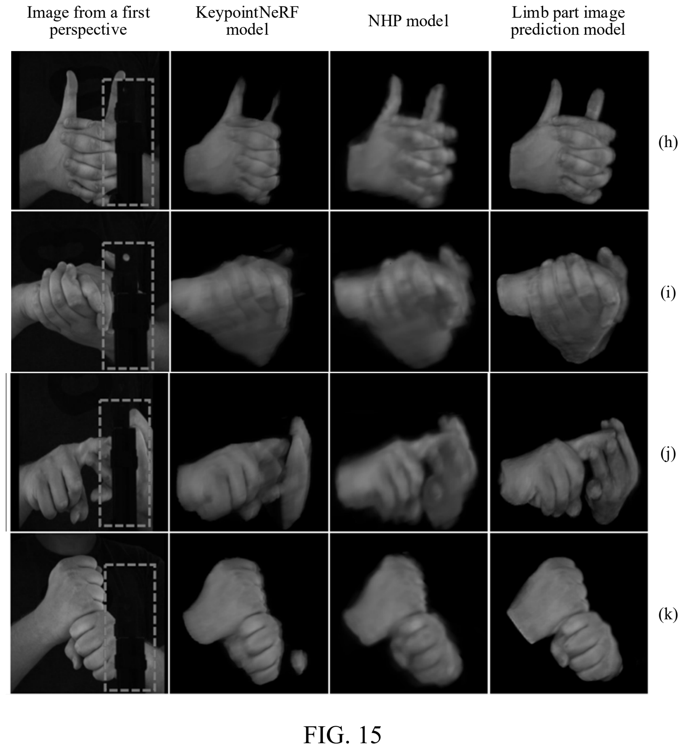

FIG. 15 is a schematic diagram of images of two hands according to an exemplary embodiment of the present disclosure. For example, FIG. 15 includes a panel (h), a panel (i), a panel (j), and a panel (k). FIG. 15 provides prediction results of images of two hands in four gestures in the presence of occlusion that are obtained by the limb part image prediction model provided in this embodiment of the present disclosure, the NHP model and the KeypointNeRF model in the related art. In the panel (h) to the panel (k) in FIG. 15, varying degrees of problems of ghosting at the occlusion and severely reduced image quality occur in the images of two hands obtained through prediction by the NHP model and the KeypointNeRF model in the related art, but the limb part image prediction model provided in this embodiment of the present disclosure avoids the foregoing problems and obtains clear images of two hands through prediction.

A person of ordinary skill in the art may understand that the foregoing embodiments may be implemented independently, or the foregoing embodiments may be combined in different manners to form new embodiments for implementing at least one of the image processing method and the method for training the limb part image prediction model in the embodiments of the present disclosure.

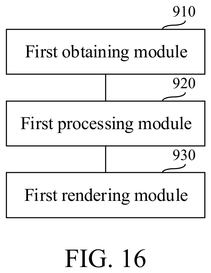

FIG. 16 is a block diagram of a structure of an image processing apparatus according to an exemplary embodiment of the present disclosure. The apparatus includes: a first obtaining module 910, configured to obtain a first limb image, the first limb image being an image of a limb object from a first perspective, the limb object including a first limb and a second limb, and the first limb and the second limb having symmetry in a physiological structure; a first processing module 920, configured to invoke a feature encoding network of a limb part image prediction model to perform image encoding on the first limb image, to obtain a fused feature representation of each of at least two query points on the limb object, an $n^{th}$ query point in the at least two query points being a query point on the first limb, an $n^{th}$ fused feature representation of the $n^{th}$ query point indicating a feature representation of an image region with symmetry in the physiological structure, and the $n^{th}$ fused feature representation being configured for supplementing a feature representation of the $n^{th}$ query point based on the symmetry of the limb object by using a feature representation on the second limb; and a first rendering module 930, configured to invoke a decoding network of the limb part image prediction model to perform feature decoding on fused feature representations of the at least two query points, to obtain decoded features; and perform rendering based on the decoded features to obtain a second limb image, the second limb image being an image of the limb object from a second perspective, a generation region corresponding to the $n^{th}$ query point in the second limb image being obtained through decoding after feature supplementation is performed based on the feature representation on the second limb, and the second perspective being different from the first perspective.

In some embodiments, the $n^{th}$ fused feature representation of the $n^{th}$ query point includes a first region feature and a second region feature; and the first processing module 920 is further configured to: invoke the feature encoding network to extract, from the first limb image, the first region feature of a peripheral region of the $n^{th}$ query point on the first limb and to extract, from the first limb image, the second region feature of a symmetrical region on the second limb, the symmetrical region and the peripheral region of the $n^{th}$ query point having symmetry in the physiological structure; concatenate the first region feature and the second region feature to obtain the $n^{th}$ fused feature representation of the $n^{th}$ query point; and summarize fused feature representations of all query points to obtain at least two fused feature representations.

In some embodiments, the first processing module 920 is further configured to: perform prediction on the first region feature and the second region feature to obtain a first weight corresponding to the first region feature and a second weight corresponding to the second region feature; and concatenate a product of the first weight and the first region feature and a product of the second weight and the second region feature to obtain the $n^{th}$ fused feature representation corresponding to the $n^{th}$ query point.

In some embodiments, the feature encoding network includes an encoding subnetwork and a fusion subnetwork; and the first processing module 920 is further configured to: invoke the encoding subnetwork to perform image encoding on the first limb image, to obtain an image feature representation of the first limb image in latent space; and invoke the fusion subnetwork to extract, from the image feature representation, the first region feature of the peripheral region of the $n^{th}$ query point on the first limb and to extract the second region feature of the symmetrical region on the second limb.

In some embodiments, the limb part image prediction model further includes a structure reconstruction network; and the first processing module 920 is further configured to: invoke the structure reconstruction network to predict a three-dimensional structural grid of the limb object; determine a grid point that is adjacent to the $n^{th}$ query point and that is in the three-dimensional structural grid as a first grid point; determine a second grid point corresponding to the first grid point, a relative location of the first grid point on the first limb being the same as a relative location of the second grid point on the second limb; and determine the peripheral region of the $n^{th}$ query point based on the first grid point, and determine the symmetrical region based on the second grid point.

In some embodiments, the first processing module 920 is further configured to: determine first location information of the first grid point mapped onto the first limb image; determine the peripheral region of the $n^{th}$ query point by using the first location information as a center; determine second location information of the second grid point mapped onto the first limb image; and determine the symmetrical region by using the second location information as a center.

In some embodiments, the $n^{th}$ fused feature representation includes a spatial feature, the spatial feature indicates a spatial depth of the $n^{th}$ query point relative to a point of interest of the limb object, and the point of interest is a point, on the limb object, having visual saliency or associated with an activity of the limb object; the first obtaining module 910 is further configured to obtain a location of interest of the point of interest on the three-dimensional structural grid and a query location of the $n^{th}$ query point on the three-dimensional structural grid; and the first processing module 920 is further configured to invoke the feature encoding network to construct the spatial feature based on the location of interest and the query location; and add the spatial feature to the fused feature representation.

In some embodiments, the fused feature representation indicates at least one of a texture feature and a geometric structure feature of the limb object.

In some embodiments, when the fused feature representation indicates the texture feature of the limb object, the $n^{th}$ fused feature representation includes a global texture feature; and the first processing module 920 is further configured to: invoke the feature encoding network to perform image encoding on the first limb image, to obtain the global texture feature; and add the global texture feature to the fused feature representation, the global texture feature being a global feature of the limb object in the first limb image.

In some embodiments, the global texture feature includes a first texture feature of the first limb and a second texture feature of the second limb; and the first processing module 920 is further configured to: invoke, based on a location of the first limb, the feature encoding network to extract the first texture feature from the first limb image; and invoke, based on a location of the second limb, the feature encoding network to extract the second texture feature from the first limb image.

In some embodiments, the first texture feature and the second texture feature correspondingly have mutually independent weight information in the fused feature representation; and the first processing module 920 is further configured to: invoke the feature encoding network to predict the weight information corresponding to the first texture feature and the weight information corresponding to the second texture feature; and add the first texture feature, the second texture feature, the weight information corresponding to the first texture feature, and the weight information corresponding to the second texture feature to the fused feature representation.

In some embodiments, the limb object includes, but is not limited to, at least one of two hands, two arms, two feet, two legs, a face, a head, and a body.

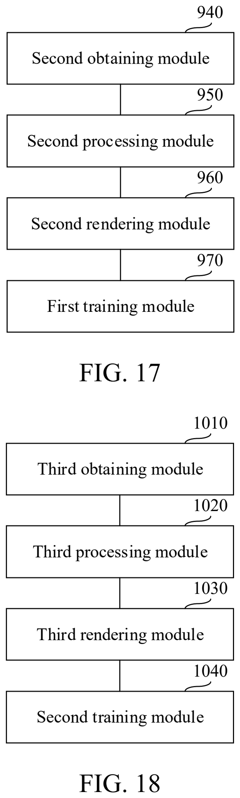

FIG. 17 is a block diagram of a structure of an apparatus for training a limb part image prediction model according to an exemplary embodiment of the present disclosure. The limb part image prediction model includes a feature encoding network and a decoding network. The apparatus includes: a second obtaining module 940, configured to obtain a sample information pair, the sample information pair including a first sample image and a second sample image, the first sample image being an image of a sample object from a first perspective, the second sample image being an image of the sample object from a second perspective, the first perspective being different from the second perspective, the sample object including a first limb and a second limb, and the first limb and the second limb having symmetry in a physiological structure; a second processing module 950, configured to invoke the feature encoding network to perform image encoding on the first sample image, to obtain a predicted feature representation of each of at least two sample query points on the sample object, an $n^{th}$ sample query point in the at least two sample query points being a sample query point on the first limb, an $n^{th}$ predicted feature representation of the $n^{th}$ sample query point indicating a feature representation of a sample region with symmetry in the physiological structure, and the $n^{th}$ predicted feature representation being configured for supplementing a feature representation of the $n^{th}$ sample query point based on the symmetry of the sample object by using a feature representation on the second limb; a second rendering module 960, configured to invoke the decoding network to perform feature decoding on predicted feature representations of the at least two sample query points, to obtain sample decoded features; and perform rendering based on the sample decoded features to obtain a predicted limb image, a generation region corresponding to the $n^{th}$ sample query point in the predicted limb image being obtained through decoding after feature supplementation is performed based on the feature representation on the second limb, and the predicted limb image being an image that is of the sample object from the second perspective and that is obtained through prediction; and a first training module 970, configured to train the limb part image prediction model based on a difference between the predicted limb image and the second sample image to obtain a trained limb part image prediction model.

In some embodiments, the $n^{th}$ predicted feature representation of the $n^{th}$ sample query point includes a first predicted region feature and a second predicted region feature; and the second processing module 950 is further configured to: invoke the feature encoding network to extract, from the first sample image, the first predicted region feature of a peripheral region of the $n^{th}$ sample query point on the first limb and to extract, from the first sample image, the second predicted region feature of a symmetrical region on the second limb, the symmetrical region and the peripheral region of the $n^{th}$ sample query point having symmetry in the physiological structure; concatenate the first predicted region feature and the second predicted region feature to obtain the $n^{th}$ predicted feature representation of the $n^{th}$ sample query point; and summarize predicted feature representations of all sample query points to obtain at least two predicted feature representations.

In some embodiments, the second processing module 950 is further configured to: invoke the feature encoding network to perform prediction on the first predicted region feature and the second predicted region feature to obtain a first weight corresponding to the first predicted region feature and a second weight corresponding to the second predicted region feature; perform concatenation based on a product of the first weight and the first predicted region feature and a product of the second weight and the second predicted region feature to obtain the $n^{th}$ predicted feature representation corresponding to the $n^{th}$ query point; and summarize all predicted feature representations to obtain at least two predicted feature representations.

In some embodiments, the limb part image prediction model further includes a discrimination network; the second processing module 950 is further configured to invoke the discrimination network to perform prediction based on the predicted limb image, to obtain first visibility information, the first visibility information being presented from the second perspective, and the first visibility information being visibility status that is of the sample object observed from the first perspective and that is predicted in the predicted limb image; the second obtaining module 940 is further configured to obtain second visibility information of the sample object, the second visibility information being presented from the second perspective, and the second visibility information being visibility status of the sample object that is in the first sample image and that is observed from the first perspective; and the first training module 970 is further configured to perform supplementary training on the discrimination network or a prediction submodel of the limb part image prediction model based on a difference between the first visibility information and the second visibility information, the prediction submodel including the feature encoding network and the decoding network.

FIG. 18 is a block diagram of a structure of an apparatus for training a limb part image prediction model according to another exemplary embodiment of the present disclosure. The limb part image prediction model includes a feature encoding network, a decoding network, and a discrimination network. The apparatus includes: a third obtaining module 1010, configured to obtain a first sample image, the first sample image being an image of a sample object from a first perspective, the sample object including a first limb and a second limb, and the first limb and the second limb having symmetry in a physiological structure; a third processing module 1020, configured to invoke the feature encoding network to perform image encoding on the first sample image, to obtain a predicted feature representation of each of at least two sample query points on the sample object, an $n^{th}$ sample query point in the at least two sample query points being a sample query point on the first limb, an $n^{th}$ predicted feature representation of the $n^{th}$ sample query point indicating a feature representation of a sample region with symmetry in the physiological structure, and the $n^{th}$ predicted feature representation being configured for supplementing a feature representation of the $n^{th}$ sample query point based on the symmetry of the sample object by using a feature representation on the second limb; a third rendering module 1030, configured to invoke the decoding network to perform feature decoding on predicted feature representations of the at least two sample query points, to obtain sample decoded features; and perform rendering based on the sample decoded features to obtain a predicted limb image, a generation region corresponding to the $n^{th}$ sample query point in the predicted limb image being obtained through decoding after feature supplementation is performed based on the feature representation on the second limb, the predicted limb image being an image that is of the sample object from a second perspective and that is obtained through prediction, and the first perspective being different from the second perspective; the third processing module 1020 being further configured to invoke the discrimination network to perform prediction based on the predicted limb image, to obtain first visibility information, the first visibility information being presented from the second perspective, and the first visibility information being visibility status that is of the sample object observed from the first perspective and that is predicted in the predicted limb image; the third obtaining module 1010 being further configured to obtain second visibility information of the sample object, the second visibility information being presented from the second perspective, and the second visibility information being visibility status of the sample object that is in the first sample image and that is observed from the first perspective; and a second training module 1040, configured to perform adversarial training on the discrimination network or a prediction submodel of the limb part image prediction model based on a difference between the first visibility information and the second visibility information to obtain a trained limb part image prediction model, the prediction submodel including the feature encoding network and the decoding network.

When the apparatus provided in the foregoing embodiments implements functions of the apparatus, the division into the foregoing functional modules is merely an example for description. In practice, the functions may be assigned to and completed by different functional modules based on actual requirements. In other words, an internal structure of a device is divided into different functional modules, to complete all or some of the functions described above.

Specific manners of performing operations by the modules of the apparatus in the foregoing embodiments have been described in detail in the embodiments related to the method. Technical effects achieved by performing the operations by the modules are the same as the technical effects in the embodiments related to the method, and details are not described herein again.

An embodiment of the present disclosure further provides a computer device. The computer device includes a processor and a memory. The memory stores executable instructions. The processor is configured to execute the executable instructions in the memory to implement at least one of the image processing method and the method for training the limb part image prediction model provided in the foregoing method embodiments.

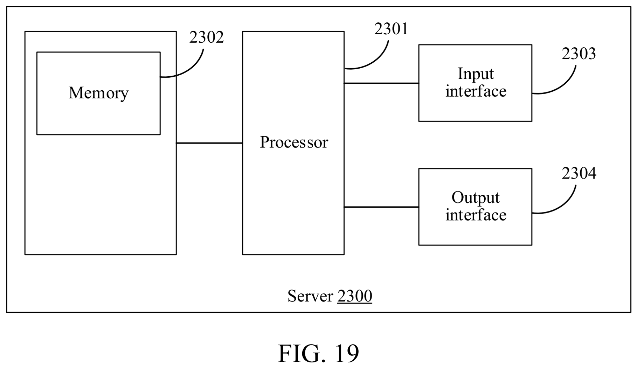

In one embodiment, the computer device is a server. For example, FIG. 19 is a block diagram of a structure of a server according to an exemplary embodiment of the present disclosure. Usually, a server 2300 includes a processor 2301 and a memory 2302.

The processor 2301 may include one or more processing cores, for example, a 4-core processor or an 8-core processor. The processor 2301 may be implemented in at least one hardware form of digital signal processing (DSP), a field-programmable gate array (FPGA), and a programmable logic array (PLA). The processor 2301 may also include a main processor and a coprocessor. The main processor is a processor configured to process data in an awake state, and is also referred to as a central processing unit (CPU). The coprocessor is a low power consumption processor configured to process data in a standby state. In some embodiments, the processor 2301 may be integrated with a graphics processing unit (GPU). The GPU is configured to render and draw content that needs to be displayed on a display. In some embodiments, the processor 2301 may further include an artificial intelligence (AI) processor. The AI processor is configured to process computing operations related to machine learning.

The memory 2302 may include one or more computer-readable storage media. The computer-readable storage medium may be non-transient. The memory 2302 may further include a high-speed random access memory and a nonvolatile memory, for example, one or more disk storage devices or flash storage devices. In some embodiments, a non-transient computer-readable storage medium in the memory 2302 is configured to store at least one executable instruction, and the at least one executable instruction is configured for being executed by the processor 2301 to implement at least one of the image processing method and the method for training the limb part image prediction model provided in the method embodiments of the present disclosure.

In some embodiments, the server 2300 may further include an input interface 2303 and an output interface 2304. The processor 2301, the memory 2302, and the input interface 2303 or the output interface 2304 may be connected through a bus or a signal cable. Each peripheral may be connected to the input interface 2303 and the output interface 2304 through a bus, a signal cable, or a circuit board. The input interface 2303 and the output interface 2304 may be configured to connect at least one peripheral related to input/output (I/O) to the processor 2301 and the memory 2302. In some embodiments, the processor 2301, the memory 2302, the input interface 2303, and the output interface 2304 are integrated on the same chip or circuit board. In some other embodiments, any one or two of the processor 2301, the memory 2302, the input interface 2303, and the output interface 2304 may be implemented on a single chip or circuit board. This is not limited in the embodiments of the present disclosure.

A person skilled in the art may understand that the foregoing structures do not constitute a limitation on the server 2300, and the server 2300 may include more or fewer components than those shown in the figure, or some components may be combined, or a different component deployment may be used.

In an exemplary embodiment, a chip is further provided. The chip includes at least one of a programmable logic circuit and program instructions. When running on a computer device, the chip is configured to implement at least one of the image processing method and the method for training the limb part image prediction model according to the foregoing aspect.

In an exemplary embodiment, a computer program product is further provided. The computer program product includes executable instructions. The executable instructions are stored in a computer-readable storage medium. A processor of a computer device reads the computer instructions from the computer-readable storage medium and executes the executable instructions, to implement at least one of the image processing method and the method for training the limb part image prediction model provided in the foregoing method embodiments.

In an exemplary embodiment, a computer-readable storage medium is further provided. The computer-readable storage medium stores executable instructions. The executable instructions are loaded and executed by a processor to implement at least one of the image processing method and the method for training the limb part image prediction model provided in the foregoing method embodiments.

A person of ordinary skill in the art may understand that all or some of the operations in the foregoing embodiments may be implemented by hardware, or may be implemented by a program instructing relevant hardware. The program may be stored in a computer-readable storage medium. The storage medium may be a read-only memory, a magnetic disk, an optical disc, or the like.

A person skilled in the art may be aware that in the foregoing one or more examples, the functions described in the embodiments of the present disclosure may be implemented by hardware, software, firmware, or any combination thereof. When being implemented by software, these functions may be stored in a computer-readable storage medium or may be used as one or more instructions or code in a computer-readable storage medium for transmission. The computer-readable storage medium includes a computer storage medium and a communication medium. The communication medium includes any medium that facilitates transfer of a computer program from one place to another place. The storage medium may be any available medium accessible to a general-purpose or dedicated computer.

The foregoing descriptions are merely exemplary embodiments of the present disclosure, but are not intended to limit the present disclosure. Any modification, equivalent replacement, or improvement made within the spirit and principle of the present disclosure shall fall within the protection scope of the present disclosure.

**Claims**

1. A method for image processing, performed by a computer device, the method comprising:

   obtaining a first limb image, wherein the first limb image is an image of a limb object captured under a first perspective, the limb object comprising a first limb and a second limb having symmetry in a physiological structure;
   invoking a feature encoding network of a limb part image prediction model to perform image encoding on the first limb image, to obtain a fused feature representation of each of at least two query points on the limb object, wherein an $n^{th}$ query point in the at least two query points is a query point on the first limb, and an $n^{th}$ fused feature representation of the $n^{th}$ query point indicates a feature representation of an image region with symmetry in the physiological structure and is used for supplementing a feature representation of the $n^{th}$ query point based on the symmetry of the limb object using a feature representation on the second limb;
   invoking a decoding network of the limb part image prediction model to perform feature decoding on fused feature representations of the at least two query points, to obtain decoded features; and
   performing rendering based on the decoded features to obtain a second limb image, wherein the second limb image is an image of the limb object captured under a second perspective different from the first perspective, and a generation region corresponding to the $n^{th}$ query point in the second limb image is obtained through decoding after feature supplementation is performed based on the feature representation on the second limb.

2. The method according to claim 1, wherein the $n^{th}$ fused feature representation of the $n^{th}$ query point comprises a first region feature and a second region feature; and
   wherein invoking the feature encoding network of the limb part image prediction model to perform image encoding on the first limb image, to obtain the fused feature representation of each of at least two query points on the limb object comprises:

   invoking the feature encoding network to extract, from the first limb image, the first region feature of a peripheral region of the $n^{th}$ query point on the first limb and the second region feature of a symmetrical region on the second limb, wherein the symmetrical region and the peripheral region of the $n^{th}$ query point have symmetry in the physiological structure;
   concatenating the first region feature and the second region feature to obtain the $n^{th}$ fused feature representation of the $n^{th}$ query point; and
   summarizing fused feature representations of all query points to obtain at least two fused feature representations.

3. The method according to claim 1 or 2, wherein concatenating the first region feature and the second region feature to obtain the $n^{th}$ fused feature representation of the $n^{th}$ query point comprises:

performing prediction on the first region feature and the second region feature to obtain a first weight corresponding to the first region feature and a second weight corresponding to the second region feature; and concatenating a product of the first weight and the first region feature and a product of the second weight and the second region feature to obtain the $n^{th}$ fused feature representation corresponding to the $n^{th}$ query point.

4. The method according to any one of claims 1 to 3, wherein the feature encoding network comprises an encoding subnetwork and a fusion subnetwork; and
wherein invoking the feature encoding network to extract, from the first limb image, the first region feature of the peripheral region of the $n^{th}$ query point on the first limb and the second region feature of the symmetrical region on the second limb comprises:

invoking the encoding subnetwork to perform image encoding on the first limb image, to obtain an image feature representation of the first limb image in latent space; and
invoking the fusion subnetwork to extract, from the image feature representation, the first region feature of the peripheral region of the $n^{th}$ query point on the first limb and the second region feature of the symmetrical region on the second limb.

5. The method according to any one of claims 1 to 4, wherein the limb part image prediction model further comprises a structure reconstruction network, and the method further comprises:

invoking the structure reconstruction network to predict a three-dimensional structural grid of the limb object;
determining a first grid point, wherein the first grid point is adjacent to the $n^{th}$ query point in the three-dimensional structural grid;
determining a second grid point corresponding to the first grid point, wherein a relative location of the first grid point on the first limb is the same as a relative location of the second grid point on the second limb; and
determining the peripheral region of the $n^{th}$ query point using the first grid point, and determining the symmetrical region using the second grid point.

6. The method according to any one of claims 1 to 5, wherein determining the peripheral region of the $n^{th}$ query point using the first grid point, and determining the symmetrical region using the second grid point comprises:

determining first location information of the first grid point mapped onto the first limb image;
determining the peripheral region of the $n^{th}$ query point using the first location information as a center;
determining second location information of the second grid point mapped onto the first limb image; and
determining the symmetrical region using the second location information as a center.

7. The method according to any one of claims 1 to 6, wherein the $n^{th}$ fused feature representation comprises a spatial feature, the spatial feature indicating a spatial depth of the $n^{th}$ query point relative to a point of interest of the limb object, and the point of interest being a point, on the limb object, having visual saliency or associated with an activity of the limb object; and
wherein the method further comprises:

obtaining a location of interest of the point of interest on a three-dimensional structural grid and a query location of the $n^{th}$ query point on the three-dimensional structural grid;
invoking the feature encoding network to construct the spatial feature based on the location of interest and the query location; and
adding the spatial feature to the fused feature representation.

8. The method according to any one of claims 1 to 7, wherein the fused feature representation indicates at least one of a texture feature and a geometric structure feature of the limb object.

9. The method according to any one of claims 1 to 8, wherein when the fused feature representation indicates a texture feature of the limb object, the $n^{th}$ fused feature representation comprises a global texture feature; and
wherein the method further comprises:

invoking the feature encoding network to perform image encoding on the first limb image, to obtain the global texture feature; and
adding the global texture feature to the fused feature representation, wherein the global texture feature is a global feature of the limb object in the first limb image.

10. The method according to any one of claims 1 to 9, wherein the global texture feature comprises a first texture feature of the first limb and a second texture feature of the second limb; and

wherein invoking the feature encoding network to perform image encoding on the first limb image, to obtain the global texture feature comprises:

invoking, based on a location of the first limb, the feature encoding network to extract the first texture feature from the first limb image; and

invoking, based on a location of the second limb, the feature encoding network to extract the second texture feature from the first limb image.

11. The method according to any one of claims 1 to 10, wherein the first texture feature and the second texture feature correspondingly have mutually independent weight information in the fused feature representation; and

wherein adding the global texture feature to the fused feature representation comprises:

invoking the feature encoding network to predict the weight information corresponding to the first texture feature and the weight information corresponding to the second texture feature; and

adding the first texture feature, the second texture feature, the weight information corresponding to the first texture feature, and the weight information corresponding to the second texture feature to the fused feature representation.

12. A method for training a limb part image prediction model, wherein the method is performed by a computer device, the limb part image prediction model comprises a feature encoding network and a decoding network, and the method comprises:

obtaining a sample information pair, wherein the sample information pair comprises a first sample image and a second sample image, the first sample image being an image of a sample object captured under a first perspective, the second sample image being an image of the sample object captured under a second perspective different from the first perspective, and the sample object comprising a first limb and a second limb having symmetry in a physiological structure;

invoking the feature encoding network to perform image encoding on the first sample image, to obtain a predicted feature representation of each of at least two sample query points on the sample object, wherein an $n^{th}$ sample query point in the at least two sample query points is a sample query point on the first limb, an $n^{th}$ predicted feature representation of the $n^{th}$ sample query point indicates a feature representation of a sample region with symmetry in the physiological structure and the $n^{th}$ is used for supplementing a feature representation of the $n^{th}$ sample query point based on the symmetry of the sample object using a feature representation on the second limb;

invoking the decoding network to perform feature decoding on predicted feature representations of the at least two sample query points, to obtain sample decoded features;

performing rendering based on the sample decoded features to obtain a predicted limb image, wherein a generation region corresponding to the $n^{th}$ sample query point in the predicted limb image is obtained through decoding after feature supplementation is performed based on the feature representation on the second limb, and the predicted limb image is an image that is of the sample object obtained through prediction under the second perspective; and

training the limb part image prediction model using a difference between the predicted limb image and the second sample image to obtain a trained limb part image prediction model.

13. The method according to claim 12, wherein the $n^{th}$ predicted feature representation of the $n^{th}$ sample query point comprises a first predicted region feature and a second predicted region feature; and

wherein invoking the feature encoding network to perform image encoding on the first sample image, to obtain the predicted feature representation of each of at least two sample query points on the sample object comprises:

invoking the feature encoding network to extract, from the first sample image, the first predicted region feature of a peripheral region of the $n^{th}$ sample query point on the first limb and the second predicted region feature of a symmetrical region on the second limb, wherein the symmetrical region and the peripheral region of the $n^{th}$ sample query point have symmetry in the physiological structure;

concatenating the first predicted region feature and the second predicted region feature to obtain the $n^{th}$ predicted feature representation of the $n^{th}$ sample query point; and

summarizing predicted feature representations of all sample query points to obtain at least two predicted feature representations.

14. The method according to claim 12 or 13, wherein the limb part image prediction model further comprises a discrimination network; and
wherein the method further comprises:

invoking the discrimination network to perform prediction on the predicted limb image, to obtain first visibility information, wherein the first visibility information is presented from the second perspective, and the first visibility information is a visibility status of the sample object from the first perspective and is predicted in the predicted limb image;
obtaining second visibility information of the sample object, wherein the second visibility information is presented from the second perspective and is a visibility status of the sample object in the first sample image from the first perspective; and
performing supplementary training on the discrimination network or a prediction submodel of the limb part image prediction model using a difference between the first visibility information and the second visibility information, wherein the prediction submodel comprises the feature encoding network and the decoding network.

15. A method for training a limb part image prediction model, performed by a computer device, the method comprising:

obtaining a first sample image, wherein the first sample image is an image of a sample object captured under a first perspective, the sample object comprising a first limb and a second limb having symmetry in a physiological structure;
invoking a feature encoding network of the limb part image prediction model to perform image encoding on the first sample image, to obtain a predicted feature representation of each of at least two sample query points on the sample object, wherein an $n^{th}$ sample query point in the at least two sample query points is a sample query point on the first limb, an $n^{th}$ predicted feature representation of the $n^{th}$ sample query point indicates a feature representation of a sample region with symmetry in the physiological structure and is used for supplementing a feature representation of the $n^{th}$ sample query point based on the symmetry of the sample object using a feature representation on the second limb;
invoking a decoding network of the limb part image prediction model to perform feature decoding on predicted feature representations of the at least two sample query points, to obtain sample decoded features;
performing rendering based on the sample decoded features to obtain a predicted limb image, wherein a generation region corresponding to the $n^{th}$ sample query point in the predicted limb image is obtained through decoding after feature supplementation is performed based on the feature representation on the second limb, the predicted limb image is an image of the sample object obtained through prediction under a second perspective different from the first perspective;
invoking the discrimination network to perform prediction on the predicted limb image, to obtain first visibility information, wherein the first visibility information is presented from the second perspective, and the first visibility information is a visibility status of the sample object from the first perspective and is predicted in the predicted limb image;
obtaining second visibility information of the sample object, wherein the second visibility information is presented from the second perspective and is a visibility status of the sample object in the first sample image from the first perspective; and
performing adversarial training on the discrimination network or a prediction submodel of the limb part image prediction model using a difference between the first visibility information and the second visibility information to obtain a trained limb part image prediction model, wherein the prediction submodel comprises the feature encoding network and the decoding network.

16. An apparatus for image processing, comprising:

a first obtaining module, configured to obtain a first limb image, wherein the first limb image is an image of a limb object captured under a first perspective, the limb object comprising a first limb and a second limb having symmetry in a physiological structure;
a first processing module, configured to invoke a feature encoding network of a limb part image prediction model to perform image encoding on the first limb image, to obtain a fused feature representation of each of at least two query points on the limb object, wherein an $n^{th}$ query point in the at least two query points is a query point on the first limb, and an $n^{th}$ fused feature representation of the $n^{th}$ query point indicates a feature representation of an image region with symmetry in the physiological structure and is used for supplementing a feature representation of the $n^{th}$ query point based on the symmetry of the limb object using a feature representation on the second limb; and

a first rendering module, configured to invoke a decoding network of the limb part image prediction model to perform feature decoding on fused feature representations of the at least two query points, to obtain decoded features; and to perform rendering based on the decoded features to obtain a second limb image, wherein the second limb image is an image of the limb object obtained under a second perspective different from the first perspective, and a generation region corresponding to the $n^{th}$ query point in the second limb image is obtained through decoding after feature supplementation is performed based on the feature representation on the second limb.

17. An apparatus for training a limb part image prediction model, comprising:

a second obtaining module, configured to obtain a sample information pair, wherein the sample information pair comprises a first sample image and a second sample image, the first sample image being an image of a sample object captured under a first perspective, the second sample image being an image of the sample object captured under a second perspective different from the first perspective, the sample object comprising a first limb and a second limb having symmetry in a physiological structure;

a second processing module, configured to invoke a feature encoding network of the limb part image prediction model to perform image encoding on the first sample image, to obtain a predicted feature representation of each of at least two sample query points on the sample object, wherein an $n^{th}$ sample query point in the at least two sample query points is a sample query point on the first limb, an $n^{th}$ predicted feature representation of the $n^{th}$ sample query point indicates a feature representation of a sample region with symmetry in the physiological structure and is used for supplementing a feature representation of the $n^{th}$ sample query point based on the symmetry of the sample object using a feature representation on the second limb;

a second rendering module, configured to invoke a decoding network of the limb part image prediction model to perform feature decoding on predicted feature representations of the at least two sample query points, to obtain sample decoded features; and to perform rendering based on the sample decoded features to obtain a predicted limb image, wherein a generation region corresponding to the $n^{th}$ sample query point in the predicted limb image is obtained through decoding after feature supplementation is performed based on the feature representation on the second limb, and the predicted limb image is an image of the sample object obtained through prediction under the second perspective; and

a first training module, configured to train the limb part image prediction model using a difference between the predicted limb image and the second sample image to obtain a trained limb part image prediction model.

18. An apparatus for training a limb part image prediction model, comprising:

a third obtaining module, configured to obtain a first sample image, wherein the first sample image is an image of a sample object captured under a first perspective, the sample object comprising a first limb and a second limb having symmetry in a physiological structure;

a third processing module, configured to invoke a feature encoding network of the limb part image prediction model to perform image encoding on the first sample image, to obtain a predicted feature representation of each of at least two sample query points on the sample object, wherein an $n^{th}$ sample query point in the at least two sample query points is a sample query point on the first limb, an $n^{th}$ predicted feature representation of the $n^{th}$ sample query point indicates a feature representation of a sample region with symmetry in the physiological structure and is used for supplementing a feature representation of the $n^{th}$ sample query point based on the symmetry of the sample object using a feature representation on the second limb;

a third rendering module, configured to invoke a decoding network of the limb part image prediction model to perform feature decoding on predicted feature representations of the at least two sample query points, to obtain sample decoded features; and to perform rendering based on the sample decoded features to obtain a predicted limb image, wherein a generation region corresponding to the $n^{th}$ sample query point in the predicted limb image is obtained through decoding after feature supplementation is performed based on the feature representation on the second limb, the predicted limb image is an image of the sample object obtained through prediction under a second perspective different from the first perspective;

wherein the third processing module is further configured to invoke a discrimination network of the limb part image prediction model to perform prediction on the predicted limb image, to obtain first visibility information, wherein the first visibility information is presented from the second perspective, and the first visibility information is a visibility status of the sample object from the first perspective and is predicted in the predicted limb image;

the third obtaining module is further configured to obtain second visibility information of the sample object, wherein the second visibility information is presented from the second perspective and is a visibility status of the sample object in the first sample image from the first perspective; and

a second training module, configured to perform adversarial training on the discrimination network or a prediction submodel of the limb part image prediction model using a difference between the first visibility information and the second visibility information to obtain a trained limb part image prediction model, wherein the prediction submodel comprises the feature encoding network and the decoding network.

19. A computer device, comprising a processor and a memory, wherein the memory stores at least one section of executable instructions, and the processor is configured to execute the at least one section of executable instructions in the memory, to implement the method for image processing according to any one of claims 1 to 11 or the method for training the limb part image prediction model according to any one of claims 12 to 15.

20. A computer-readable storage medium having stored thereon executable instructions that, when loaded and executed by a processor, cause the processor to perform the method for image processing according to any one of claims 1 to 11 or the method for training the limb part image prediction model according to any one of claims 12 to 15.

21. A computer program product, wherein the computer program product comprises executable instructions, the executable instructions being stored in a computer-readable storage medium, and a processor reading the executable instructions from the computer-readable storage medium and executing the executable instructions to implement the method for image processing according to any one of claims 1 to 11 or the method for training the limb part image prediction model according to any one of claims 12 to 15.

FIG. 1

FIG. 2

510

Obtain a first limb image

520

Call a feature encoding network to perform image encoding on the first limb image, to obtain a fused feature representation of each of at least two query points on a limb object

530

Call a decoding network to perform feature decoding on at least two fused feature representations, to obtain decoded features; and perform rendering based on the decoded features to obtain a second limb image

FIG. 3

510

Obtain a first limb image

522

Call a feature encoding network to extract, from the first limb image, a first region feature of a peripheral region of an $n^{th}$ query point on a first limb and to extract, from the first limb image, a second region feature of a symmetrical region on a second limb

524

Call the feature encoding network to concatenate the first region feature and the second region feature, to obtain an $n^{th}$ fused feature representation of the $n^{th}$ query point

530

Call a decoding network to perform feature decoding on at least two fused feature representations, to obtain decoded features; and perform rendering based on the decoded features to obtain a second limb image

FIG. 4

510

Obtain a first limb image

522a

Call an encoding subnetwork to perform image encoding on the first limb image, to obtain an image feature representation of the first limb image in latent space

522b

Call a fusion subnetwork to extract, from the image feature representation, a first region feature of a peripheral region of an $n^{th}$ query point on a first limb and to extract a second region feature of a symmetrical region on a second limb

524

Call a feature encoding network to concatenate the first region feature and the second region feature, to obtain an $n^{th}$ fused feature representation of the $n^{th}$ query point

530

Call a decoding network to perform feature decoding on at least two fused feature representations, to obtain decoded features; and perform rendering based on the decoded features to obtain a second limb image

FIG. 5

510

Obtain a first limb image

515

Call a structure reconstruction network to predict a three-dimensional structural grid of a limb object

516

Call the structure reconstruction network to determine a grid point that is adjacent to an $n^{th}$ query point and that is in the three-dimensional structural grid as a first grid point and to determine a second grid point corresponding to the first grid point

517

Call the structure reconstruction network to determine a peripheral region of the $n^{th}$ query point based on the first grid point and to determine a symmetrical region based on the second grid point

522

Call a feature encoding network to extract, from the first limb image, a first region feature of the peripheral region of the $n^{th}$ query point on a first limb and to extract, from the first limb image, a second region feature of the symmetrical region on a second limb

524

Call the feature encoding network to concatenate the first region feature and the second region feature, to obtain an $n^{th}$ fused feature representation of the $n^{th}$ query point

530

Call a decoding network to perform feature decoding on at least two fused feature representations, to obtain decoded features; and perform rendering based on the decoded features to obtain a second limb image

FIG. 6

510

| |
|---|
| Obtain a first limb image |

520

| |
|---|
| Call a feature encoding network to perform image encoding on the first limb image, to obtain a fused feature representation of each of at least two query points on a limb object |

525

| |
|---|
| Call the feature encoding network to perform image encoding on the first limb image, to obtain a global texture feature; and add the global texture feature to the fused feature representation |

530

| |
|---|
| Call a decoding network to perform feature decoding on at least two fused feature representations, to obtain decoded features; and perform rendering based on the decoded features to obtain a second limb image |

## FIG. 7

300

Texture encoding network 402

Image texture feature 302

Structure reconstruction network 410

Three-dimensional structural grid 310

Geometry encoding network 404

Image geometric feature 304

Rotate a perspective

311    312    314

First interpolation layer 407a

Texture region feature 302a

First prediction layer 408a

Texture weight information 302b

First fusion network 406a

Second interpolation layer 407b

Geometric region feature 304a

Second prediction layer 408b

Geometric weight information 304b

Second fusion network 406b

330

Decoding network 415

FIG. 8

610

Obtain a sample information pair

620

Call a feature encoding network to perform image encoding on a first sample image, to obtain a predicted feature representation of each of at least two sample query points on a sample object

630

Call a decoding network to perform feature decoding on predicted feature representations of the at least two sample query points and perform rendering, to obtain a predicted limb image

640

Train a limb part image prediction model based on a difference between the predicted limb image and a second sample image to obtain a trained limb part image prediction model

FIG. 9

610

Obtain a sample information pair

620

Call a feature encoding network to perform image encoding on a first sample image, to obtain a predicted feature representation of each of at least two sample query points on a sample object

630

Call a decoding network to perform feature decoding on predicted feature representations of the at least two sample query points and perform rendering, to obtain a predicted limb image

640

Train a limb part image prediction model based on a difference between the predicted limb image and a second sample image to obtain a trained limb part image prediction model

652

Call a discrimination network to perform prediction based on the predicted limb image, to obtain first visibility information

654

Obtain second visibility information of the sample object

656

Perform supplementary training on the discrimination network or a prediction submodel of the limb part image prediction model based on a difference between the first visibility information and the second visibility information

FIG. 10

350

354

Discrimination
network 410

352

FIG. 11

710

Obtain a first sample image

720

Call a feature encoding network to perform image encoding on the first sample image, to extract predicted feature representations respectively corresponding to at least two sample query points on a sample object

730

Call a decoding network to perform feature decoding on at least two predicted feature representations and perform rendering, to obtain a predicted limb image

740

Call a discrimination network to perform prediction based on the predicted limb image, to obtain first visibility information

750

Obtain second visibility information of the sample object

760

Perform adversarial training on the discrimination network or a prediction submodel of a limb part image prediction model based on a difference between the first visibility information and the second visibility information to obtain a trained limb part image prediction model

FIG. 12

FIG. 13

| Image from a first perspective | KeypointNeRF model | NHP model | Limb part image prediction model | |
|---|---|---|---|---|

FIG. 14

| Image from a first perspective | KeypointNeRF model | NHP model | Limb part image prediction model | |
|---|---|---|---|---|

FIG. 15

First obtaining module — 910

First processing module — 920

First rendering module — 930

## FIG. 16

940

Second obtaining module

950

Second processing module

960

Second rendering module

970

First training module

FIG. 17

1010

Third obtaining module

1020

Third processing module

1030

Third rendering module

1040

Second training module

FIG. 18

FIG. 19

## INTERNATIONAL SEARCH REPORT

| International application No. |
|---|
| **PCT/CN2024/114151** |

**A.  CLASSIFICATION OF SUBJECT MATTER**

G06T 15/00(2011.01)i

According to International Patent Classification (IPC) or to both national classification and IPC

**B.  FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS, CNTXT, CNKI, BAIDU, VEN, WOTXT, EPTXT, USTXT, IEEE: 图像, 视角, 肢体, 身体, 部位, 对称, 人体, 编码, 解码, 重建, 模型, 融合, 区域, image, perspective, limb, body, part, symmetry, human body, encoding, decoding, reconstruction, model, fusion, region

**C.  DOCUMENTS CONSIDERED TO BE RELEVANT**

| Category* | Citation of document, with indication, where appropriate, of the relevant passages | Relevant to claim No. |
|---|---|---|
| A | CN 115482353 A (BEIJING BAIDU NETCOM SCIENCE AND TECHNOLOGY CO., LTD.) 16 December 2022 (2022-12-16) description, paragraphs 4-28 | 1-21 |
| A | CN 111222486 A (TENCENT TECHNOLOGY (SHENZHEN) CO., LTD.) 02 June 2020 (2020-06-02) entire document | 1-21 |
| A | CN 111275811 A (SHENZHEN ZHONGKE ZHIMEI TECHNOLOGY CO., LTD.) 12 June 2020 (2020-06-12) entire document | 1-21 |
| A | CN 116433476 A (YOFO MEDICAL TECHNOLOGY CO., LTD.) 14 July 2023 (2023-07-14) entire document | 1-21 |
| A | US 2023005181 A1 (TSINGHUA UNIVERSITY) 05 January 2023 (2023-01-05) entire document | 1-21 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 October 2024** | **29 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/114151**

| Patent document<br>cited in search report | | | Publication date<br>(day/month/year) | Patent family member(s) | | | Publication date<br>(day/month/year) |
|---|---|---|---|---|---|---|---|
| CN | 115482353 | A | 16 December 2022 | None | | | |
| CN | 111222486 | A | 02 June 2020 | HK | 40024760 | A0 | 18 December 2020 |
| CN | 111275811 | A | 12 June 2020 | None | | | |
| CN | 116433476 | A | 14 July 2023 | None | | | |
| US | 2023005181 | A1 | 05 January 2023 | WO | 2021184530 | A1 | 23 September 2021 |
| | | | | CN | 111415389 | A | 14 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311367748